# EUROPÄISCHE PATENTSCHRIFT

(11) **EP 1 926 782 B1**
(45) Veröffentlichungstag und Bekanntmachung des Hinweises auf die Patenterteilung: **13.04.2016**
(21) Anmeldenummer: 06776942.2
(22) Anmeldetag: 18.08.2006
(51) Int. Cl.: C09D 4/00, C09D 133/00, C08F 220/00

(54) **BESCHICHTUNGSMITTEL FÜR METALLOBERFLÄCHEN MIT ANTIADHÄSIVEN EIGENSCHAFTEN**
COATING MATERIALS FOR METAL SURFACES WITH ANTI-ADHESIVE PROPERTIES
PRODUIT DE REVETEMENT POUR SURFACES METALLIQUES PRESENTANT DES PROPRIETES ANTIADHESIVES

(30) Priorität: 22.09.2005 DE 102005045441
(43) Veröffentlichungstag der Anmeldung: 04.06.2008
(73) Patentinhaber: Henkel AG & Co. KGaA, 40589 Düsseldorf (DE); OCAS N.V., 9060 Zelzate (BE)
(72) Erfinder: HACKBARTH, Karsten, 40237 Düsseldorf (DE); WEIDE, Mirko, 40223 Düsseldorf (DE); STODT, Jürgen, 41466 Neuss (DE); GHOSH, Swapan, Kumar, B-9260 Wichelen (BE)
(86) Internationale Anmeldenummer: PCT/EP2006/008146
(87) Internationale Veröffentlichungsnummer: WO 2007/033736

(56) Entgegenhaltungen:
- WO-A-02/087340
- DE-A1- 10 341 445
- DE-A1- 19 923 118
- US-A- 5 863 650

## Beschreibung

Die vorliegende Erfindung betrifft ein chromfreies organisch/metallorganisches Korrosionsschutzmittel und ein Korrosionsschutzverfahren zur Behandlung von Oberflächen aus Stahl, die ggf. mit einer metallischen Beschichtung aus Zink, Aluminium, Kupfer, Nickel usw. versehen sind, oder aus Zink, Aluminium und ihren Legierungen. Es ist insbesondere geeignet zur Oberflächenbehandlung in Bandanlagen (coil-coating) zur Anwendung dieser Substrate im Haushalts- und Architekturbereich sowie in der Automobilindustrie. Die mit dem erfindungsgemäßen Korrosionsschutzmittel beschichteten Substrate finden ohne weitere Überlackierung insbesondere Anwendung für Bauteile, die aufgrund ihres Anwendungsbereichs anfällig für eine Besiedelung mit Mikroorganismen sind. Spezielle Beispiele hierfür sind Wärmeaustauscherflächen sowie Luftkanäle von Klimaanlagen. Kondensierende Feuchtigkeit sowie organische Stoffe in der Luft bilden hier einen guten Nährboden für Mikroorganismen. Stoffwechselprodukte dieser Mikroorganismen können zu Geruchsbelästigungen führen. Infektiöse Mikroorganismen, die über den Luftstrom verbreitet werden, können Erkrankungen hervorrufen. Die Behandlung der Metalloberflächen mit dem erfindungsgemäßen Mittel erschwert das Anhaften der Mikroorganismen und damit die Besiedelung dieser Oberflächen. Dies reduziert oder verhindert Geruchsbelästigung und Infektionsgefahr.

Die DE 197 51 153 beschreibt polymerisierbare chromfreie organische Zusammensetzungen enthaltend Titan-, Mangan- und/oder Zirconiumsalze von olefinisch ungesättigten polymerisierbaren Carbonsäuren und weiteren olefinisch ungesättigten Comonomeren sowie einen Initiator zur radikalischen Polymerisation und deren Verwendung zur organischen Coilbeschichtung von metallischen Werkstoffen. Diese nicht wäßrigen polymerisierbaren Zusammensetzungen erlauben eine chromfreie Vorbehandlung von Stahlwerkstoffen mit Korrosionsschutzeigenschaften.

WO 00/69978 beschreibt ein chromfreies Korrosionsschutzmittel, enthaltend mindestens eine Titan-, Silicium- und/oder Zirconiumverbindung der allgemeinen Formel (I) 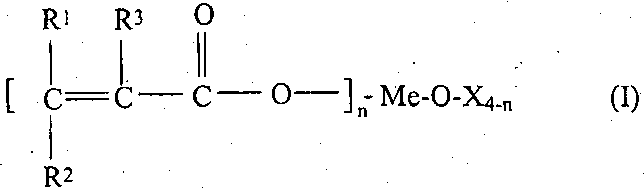
worin R¹ und/oder R² H, C₁- bis C₁₂-Alkyl, Aralkyl oder die Gruppe -CO-O-Y,
R³ = H oder C₁- bis C₁₂-Alkyl,
Me = ein Titan-, Silicium- oder Zirconiumion,
X = H, C₁- bis C₁₂-Alkyl, Aryl oder Aralkyl, Alkoxyl, Aroxyl, Sulfonyl, Phosphat, Pyrophosphat,
Y = H, C₁- bis C₁₂-Alkyl oder Me, und n = 0 bis 4 ist,
   mindestens ein weiteres olefinisch ungesättigtes Comonomer mit mindestens zwei olefinisch ungesättigten Doppelbindungen pro Molekül,
   ggf. weitere Comonomere mit einer olefinisch ungesättigten Doppelbindung pro Molekül, mindestens einen Initiator zur radikalischen und/oder kationischen Polymerisation.

Die vorstehend beschriebenen Beschichtungen dienen dem Korrosionsschutz. Sie enthalten keine Wirkstoffe, die eine Besiedelung mit Mikroorganismen verhindern oder erschweren.

Um eine Besiedelung von Oberflächen mit Mikroorganismen zu erschweren, ist es bekannt, Substanzen mit biozider Wirkung in die Beschichtung mit einzubauen, wie zum Beispiel, in WO 02/087340. Beispielsweise beschreibt die DE 103 41 445 eine antimikrobielle Antifingerprint-Beschichtung. Dabei wird in ein Beschichtungsmittel, das speziell für das Coil-Coating-Verfahren geeignet ist, nanopartikuläres Silber eingelagert. Derartige biozid ausgerüstete Beschichtungen erschweren eine Besiedelung der Oberflächen mit Mikroorganismen dadurch, dass sie angelagerte Mikroorganismen abtöten. Es besteht jedoch die Gefahr, dass durch Auslaugung des mikrobiziden Wirkstoffs zum einen die Wirksamkeit mit der Zeit nachlässt und dass zum anderen der mikrobizide Wirkstoff unerwünschterweise in die Umwelt gelangt.

Eine Besiedelung von Oberflächen mit Mikroorganismen kann auch dadurch erschwert werden, dass man das Anhaften der Mikroorganismen auf den Oberflächen verhindert oder zumindest erschwert. Dies kann dadurch geschehen, dass man auf die Oberflächen Polyethylenglykol-Polyacrylsäure-Polymere aufbringt oder derartige Polymere in das Material, das die Oberfläche bildet, einlagert. Beispielsweise wird in den Patent Abstracts of Japan für die japanische Patentanmeldung mit der Veröffentlichungsnummer 60/170673 ein Beschichtungsmittel für Materialien wie beispielsweise Schiffe genannt, die im Kontakt mit Wasser stehen. Dieses Beschichtungsmittel wird durch Copolymerisation einer polymerisierbaren ungesättigten Carbonsäure, eines hydrophoben polymerisierbaren ungesättigten Monomers sowie von Polyethylenglycol (Meth)acrylat erhalten. Auch aus WO 03/055611 und US 5 863 650 ist es bekannt, polymerisierbare Polyethylenglycol-carboxylate als antiadhäsive Beschichtung aufzubringen oder in Beschichtungen einzubauen, um diesen antiadhäsive Eigenschaften für Mikroorganismen zu verleihen.

Die vorliegende Erfindung stellt sich die Aufgabe, ein Beschichtungsmittel für Metalloberflächen zur Verfügung zu stellen, das
1. dafür geeignet ist, im Coil-Coating-Verfahren aufgebracht werden zu können,
2. thermisch oder durch Einwirkung energiereicher Strahlung wie beispielsweise UV-Strahlung härtbar ist,
3. bei einer Beschichtungsdicke von nicht mehr als 20 µm, vorzugsweise nicht mehr als 10 µm einen ausreichenden Korrosionsschutz bewirkt, wobei die Beschichtung mit dem Mittel die einzige Korrosionsschutzmaßnahme darstellt, und das
4. eine Besiedelung der beschichteten Oberflächen mit Mikroorganismen erschwert.

Die vorliegende Erfindung betrifft in einem ersten Aspekt eine thermisch oder durch Einwirken von Strahlung durch Polymerisation aushärtbare Zusammensetzung gemäß Ansprüche 1 bis 18 zur Beschichtung von metallischen Werkstoffen, enthaltend:
a) mindestens eine Metallverbindung, die vor und/oder bei dem Aushärten der Zusammensetzung durch Polymerisation mit mindestens einer der Komponente b), c) oder, falls vorhanden, d) reagiert, so dass das Metall in die ausgehärtete Zusammensetzung eingebunden wird, wobei das Metall ausgewählt ist aus Silicium, Titan, Zirkon, Mangan, Zink, Vanadium, Molybdän und Wolfram,
b) zusätzlich zur Komponente a) mindestens ein Monomer oder Oligomer, das mindestens eine Carboxyl- oder Estergruppe und mindestens eine olefinische Doppelbindung enthält und das keine Polyether-Kette aus mindestens fünf Ethylenoxid- und/oder Propylenoxid-Einheiten aufweist,
c) mindestens eine Verbindung, die sowohl eine Polyether-Kette aus mindestens fünf Ethylenoxid- und/oder Propylenoxid-Einheiten als auch mindestens eine Carboxyl- oder Estergruppe mit mindestens einer polymerisierbaren Doppelbindung, vorzugsweise eine Fumarat-, Maleinat-, Crotonat-, Acrylat- oder Methacrylat-Gruppe, enthält.

Die durch Polymerisation aushärtbare erfindungsgemäße Zusammensetzung kann beispielsweise thermisch oder durch Einwirkung von Gamma- oder Elektronenstrahlung ausgehärtet werden. In diesem Fall ist es nicht erforderlich, dass sie zusätzlich einen Polymerisations-Initiator enthält. Soll das erfindungsgemäße Beschichtungsmittel so ausgestaltet sein, dass es durch Einwirkung von elektromagnetischer Strahlung im sichtbaren oder im UV-Bereich durch Polymerisation ausgehärtet werden kann, enthält es vorzugsweise zusätzlich als Komponente d) mindestens einen Initiator zur radikalischen und/oder kationischen Polymerisation.

Die Komponenten b) und c) bilden beim Aushärten durch Polymerisation unter Einwirkung von Strahlung das organische Netzwerk der Beschichtung. In dieses Netzwerk wird spätestens beim Aushärten die Komponente a) durch chemische Bindung eingebunden und bleibt so fest im Netzwerk gebunden. Diese eingebundene Komponente a) ist wesentlich für die korrosionsschützenden Eigenschaften der Beschichtung. Dabei wählt man das Metall vorzugsweise aus aus Titan, Zirkon oder einer Mischung dieser beiden Metalle. Die Metallverbindung a) liegt in dem kompletten Beschichtungsmittel in einer Form vor, in der sie entweder selbst eine polymerisierbare Kohlenstoff-Kohlenstoff-Doppel- oder -Dreifachbindung aufweist, die bei der Polymerisationsreaktion der Komponenten b) und c) mit reagiert, oder die Metallverbindung a) liegt in einer Form vor, in der sie mit den Säuregruppen der Komponenten b) oder c) reagieren kann und auf diese Weise in das polymere Netzwerk eingebunden wird.

Beispiele für Metallverbindungen a), die mit Carboxylgruppen der Komponenten b), c) oder, falls vorhanden, d) reagieren können und auf diese Weise bei der Polymerisation in das polymere Netzwerk der Komponenten b) und c) eingebunden werden, sind Metallverbindungen, die mindestens eine an das Metall gebundene Acetylacetonat-, Alkoholat-, Thiolat-, Amino- oder Amidogruppe enthalten. Wegen ihrer leichten Verfügbarkeit und wegen der Geruchsarmut sind Metallverbindungen mit an das Metall gebundenen Acetylacetonat- oder Alkoholatgruppen bevorzugt.

Die Metallverbindung a) kann anstelle der oder zusätzlich zu den unmittelbar vorstehend beschriebenen Gruppen auch mindestens eine an das Metall gebundene organische Gruppe, vorzugsweise eine organische Säuregruppe enthalten, die mindestens eine polymerisierbare C = C - Doppelbindung oder C ≡ C - Dreifachbindung aufweist. Bei dieser organischen Säuregruppe kann es sich beispielsweise um eine Säuregruppe einer der Komponenten b), c) oder, falls vorhanden, d) handeln. Diese können sich spontan bilden, wenn man als Metallkomponente a) eine Verbindung mit an das Metall gebundenen Acetylacetonat-, Alkoholat-, Thiolat-, Amino- oder Amidogruppen einsetzt, die beim oder nach dem Vermischen durch Carbonsäuregruppen mindestens einer der Komponenten b), c) oder, falls vorhanden, d) ersetzt werden können. Eine solche Umsetzung kann man beim Herstellen des Beschichtungsmittels durch Erwärmen bewusst hervorrufen. Bei dieser Umsetzungsreaktion können die ursprünglich an das Metall gebundenen Acetylacetonat-, Alkoholat-, Thiolat-, Amino-, oder Amidogruppen als (flüchtige) Alkohole, Thiole, Amine, Amide oder Acetylaceton abgespalten werden. Diese können für das Beschichtungsmittel als Verdünnungsmittel wirken und die für das Auftragen des Beschichtungsmittels auf die Metalloberfläche erforderliche Viskosität günstig beeinflussen. Insofern kann es erwünscht sein, dass diese abgespaltenen Moleküle in dem Beschichtungsmittel verbleiben. Andererseits stellen sie flüchtige Komponenten dar, die beim Aushärten des Beschichtungsmittels abgedampft werden müssen. Falls dies unerwünscht sein sollte, können diese flüchtigen Verbindungen bei dem oder nach dem Zusammenmischen des kompletten Beschichtungsmittels und vor dem Auftragen des Beschichtungsmittels auf die Metalloberfläche durch Erwärmen und/oder Evakuieren abgezogen werden.

Die Metallverbindung a) kann beispielsweise ausgewählt sein aus Verbindungen der allgemeinen Formel (II) 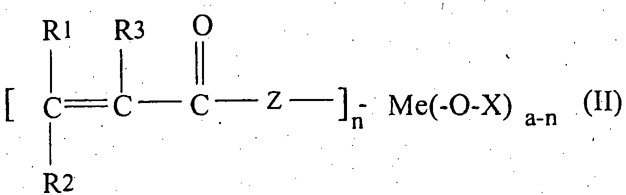
worin R1 und/oder R2 H, C₁- bis C₁₂-Alkyl, Aralkyl oder die Gruppe -CO-O-Y, R3=H oder C₁- bis C₁₂-Alkyl,
Me = ein Metallatom mit einer Oxidationsstufe von a ausgewählt aus Silicium, Titan, Zirkon, Mangan, Zink, Vanadium, Molybdän und Wolfram,
X = H, C₁- bis C₁₂-Alkyl, Aryl, Aralkyl, Alkoxyl oder Aroxyl oder 2(-O-X) = Acetylacetonat,
Y = H, C₁- bis C₁₂-Alkyl oder ein weiteres Metallion Me sein können,
Z ausgewählt ist aus O, NH₂, einer Gruppe O-Z^{b}-C(=O)-O, einer Gruppe O- Z^{b} -P(=O)-O, einer Gruppe O- Z^{b} -P(=O)₂-O, einer Gruppe O- Z^{b} -O - P(=O)-O, einer Gruppe O- Z^{b} - O -P(=O)₂-O, einer Gruppe O- Z^{b} -S(=O)₂-O, einer Gruppe O- Z^{b} -O - S(=O)₂-O, wobei Z^{b} eine organische Gruppierung darstellt,
und n = 0 bis a, vorzugsweise 1 bis (a-1) ist, wobei a die Oxidationsstufe des Metalls Me bedeutet.

Die Gruppe in der eckigen Klammer in der allgemeinen Formel (II) stellt eine organische Säuregruppe dar, die eine polymerisierbare C = C-Doppelbindung aufweist. Sofern n der Formel (II) größer als 0 ist, kann die Metallverbindung durch Reaktion dieser Doppelbindung bei der Polymerisation der Komponenten b) und c) in das polymere Netzwerk mit eingebunden werden. Andererseits können die Gruppen -O-X der Metallverbindung der Formel (II) durch Säuregruppen der Komponenten b), c) oder, wenn vorhanden, d) ersetzt werden. Diese Substitutionsreaktion stellt einen weiteren Mechanismus dar, wie das Metall Me in das polymere organische Netzwerk eingebunden werden kann.

Dabei kann der durch die eckige Klammer der Formel (II) angegebene organische Säurerest der Komponente b) oder c) entsprechen, so dass die Formel (II) ein (partielles) Umsetzungsprodukt einer Metallverbindung Me(-O-X)ₐ mit der Komponente b) oder c) darstellen kann. Wie bereits vorstehend ausgeführt, können sich derartige (partielle) Umsetzungsprodukte bei der Herstellung der Zusammensetzung aus den Komponenten a), b) und c) von selbst bilden. In diesem Fall ist zu erwarten, dass die Zusammensetzung unterschiedliche Metallverbindungen a) der Formel (II) enthält, die sich durch den Zahlenwert von n unterscheiden. Aus sterischen Gründen ist zu erwarten, dass in der Formel (II) n nicht den Wert von a annimmt, d. h. dass die Gruppen (-O-X) in der Metallverbindung nicht vollständig durch die Säuregruppen der eckigen Klammer ersetzt werden. In der anwendungsfertigen Zusammensetzung ist n in der Regel größer als 0 und vorzugsweise mindestens 1, jedoch nicht größer als (a-1).

In der allgemeinen Formel (II) bedeutet a die Oxidationsstufe des Metalls Me. In der Regel werden die Metalle in der Metallverbindung a) in ihrer unter Atmosphärenbedingungen stabilsten Oxidationsstufe vorliegen. D. h. für die Metalle Silicium, Titan und Zirkon ist a in der Regel gleich 4, für Mangan gleich 2 oder gleich 4, für Zink gleich 2, für Vanadium gleich 5 und für Molybdän und Wolfram gleich 4 oder gleich 6.

Im einfachsten Fall bedeutet Z in der allgemeinen Formel (II) Sauerstoff, d. h. die Gruppe in der eckigen Klammer stellt eine ungesättigte Carbonsäuregruppe dar. Z kann jedoch, wie vorstehend angegeben, komplexer aufgebaut sein und seinerseits eine komplette Carboxylatgruppe oder eine phosphor- oder schwefelhaltige Säuregruppe beinhalten. In diesen Fällen enthält das Fragment Z seinerseits eine organische Brückengruppe Z^{b}. Diese Brückengruppe ist dann vorzugsweise ausgewählt aus einer linearen oder verzweigte Alkylengruppe, vorzugsweise einer linearen Alkylengruppe (CH₂)ₓ, wobei x eine Zahl im Bereich von 1 bis 10, insbesondere im Bereich von 2 bis 4 ist,
(CHR⁴ - CHR⁴ - O -)_{y} CHR⁴ - CHR⁴, wobei R⁴ = unabhängig voneinander jeweils H oder CH₃ und y = 0 oder eine Zahl im Bereich von 1 bis 9 ist,
(CH₂)ₓ - O - C(=O) - (CH₂)_{y}, wobei x und y unabhängig voneinander eine Zahl im Bereich von 1 bis 10, insbesondere im Bereich von 2 bis 4 ist.

Die Reste R¹, R² und/oder R³- der allgemeinen Formel (II) können, wie weiter oben angegeben, nicht nur H, sondern komplexere Reste darstellen. Es ist jedoch bevorzugt, dass in der allgemeinen Formel (II) mindestens einer, vorzugsweise mindestens zwei und insbesondere alle drei der Reste R1, R2 und R3 unabhängig voneinander ausgewählt sind aus H, CH₃, C₂H₅, C₃H, und C₄H₉. Im Falle einer Propyl- oder Butylgruppe kann diese als n- oder i-Isomer vorliegen.

Konkrete Beispiele für die erfindungsgemäß einzusetzenden Titan-, Silicium- und/oder Zirconiumverbindungen als Metallverbindung a) sind die folgenden Verbindungen: Isopropyldimethacrylisostearoyltitanat, Isopropyltri(dodecyl)benzolsulfonyltitanat, Isopropyltri(octyl)phosphatotitanat, Isopropyl(4-amino)benzolsulfonyl-di-(dodecyl)benzolsulfonyltitanat, Alkoxyltrimethacryltitanat, Isopropyltri(dioctyl)pyrophosphatotitanat, Alkoxytriacryltitanat, Isopropyltri(N-ethylendiamino)ethyltitanat, Di(cumyl)phenyloxoethylentitanat, Di(dioctyl)pyrophosphatoxoethylentitanat, Dimethyl-oxoethylentitanat, Di(butylmethyl)pyrophosphat-oxoethylendi(dioctyl)phosphitotitanat, Di(dioctyl)phosphato-ethylentitanat, Di(butylmethyl)pyrophosphato-ethylentitanat, Tetraethyltitanat, Tetraisopropyltitanat, Tetra-n-propyltitanat, Tetra-n-butyltitanat, n-Butylpolytitanat, Tetra-2-ethylhexyltitanat, Tetraisooctyltitanat, Isostearoyltitanat, monomeres Cresyltitanat, polymeres Cresyltitanat, Octylenglykoltitanat, Titanylacetylacetonate, Düsopropoxy-bis-ethylacetoacetatotitanat, Din-butoxy-bis-ethylacetoacetatotitanat, Düsobutoxy-bis-ethylacetoacetatotitanat, Triethanolamintitanat, Isopropyltrüsostearoyltitanat, Addukte von 2-(N,N-dimethylamino)isobutanol, Triethylamin, (meth)acrylatfunktionalisiertem Aminderivat, methacrylamidfunktionalisiertem Aminderivat mit Di(dioctyl)phosphato-ethylentitanat, Tetraisopropyl-di(dioctyl)phosphitotitanat, Tetraoctyl-di(ditridecyl)phosphitotitanat, Tetra' (2,2-diallyloxymethyl)butyl-di(ditridecyl)phosphitotitanat, Neopentyl-(diallyl)oxytrineodecanoyltitanat, Neopentyl-(diallyl)oxy-tri(dodecyl)benzolsulfonyltitanat, Neopentyl-(diallyl)oxy-tri(dioctyl)phosphatotitanat, Neopentyl-(diallyl)oxytri(dioctyl)pyrophosphatotitanat, Neopentyl-(diallyl)oxy-tri(N-ethylendiamino)ethyltitanat, Neopentyl-(diallyl)oxy-tri(m-amino)phenyltitanat, Neopentyl-(diallyl)oxytrihydroxycaproyltitanat, Cyclo(dioctyl)pyrophosphatodioctyltitanat, Dicyclo(dioctyl)pyrophosphatotitanat, 2-(Acryloxyethoxy)trimethylsilan, N-(3-acryloxy-2-hydroxypropyl)-3-aminopropyltriethoxysilan, (3-Acryloxypropyl)dimethylmethoxysilan, (3-Acryloxypropyl)methylbis-(trimethylsiloxy)silan, (3-Acryloxypropyl)methyldimethoxysilan, (3-Acryloxypropyl)trimethoxysilan, (3-Acryloxypropyl)tris(trimethylsiloxy)silan, Acryloxytrimethylsilan, 1,3-Bis((acryloxymethyl)phenethyl)-tetramethyldisiloxan, Bis(methacryloxy)diphenylsilan, 1,3-Bis(3-methacryloxypropyl)tetrakis(trimethylsiloxy)disiloxan, 1,3-Bis(3-methacryloxypropyl)tetramethyldisiloxan, 1,3-Bis(methacryloxy)-2-trimethylsiloxypropan, Methacrylamidopropyltriethoxysilan, Methacrylamidotrimethylsilan, Methacryloxyethoxytrimethylsilan, N-(3-Methacryloxy-2-hydroxypropyl)-3-aminopropyltriethoxysilan, (Methacryloxymethyl)bis(trimethylsiloxy)methylsilan, (Methacryloxymethyl)dimethylethoxysilan, (Methacryloxymethyl)phenyldimethylsilan, Methacryloxymethyltriethoxysilan, Methacryloxymethyltrimethoxysilan, Methacryloxymethyltrimethylsilan, Methacryloxymethyltris(trimethylsiloxy)silan, O-Methacryloxy(polyethyleneoxy)trimethylsilan, 3-Methacryloxypropylbis(trimethylsiloxy)methylsilan, 3-Methacryloxypropyldimethylethoxysilan, Methacryloxypropyldimethylmethoxysilan, Methacryloxypropylmethyldiethoxysilan, Methacryloxypropylmethyldimethoxysilan, Methacryloxypropylpentamethyldisiloxan, Methacryloxypropylsilatran, Methacryloxypropyltriethoxysilan, Methacryloxypropyltrimethoxysilan, Methacryloxypropyltris(methoxyethoxy)silan, Methacryloxypropyltris(trimethylsiloxy)silan, Methacryloxypropyltris(trimethylsiloxy)silan, Methacryloxypropyltris(vinyldimethylsiloxy)silan, Methacryloxytrimethylsilan, Tetrakis(2-methacryloxyethoxy)silan Zr-hexafluoropentandionat, Zr-isopropoxid, Zrmethacryloylethylacetoacetat-tri-n-propoxid, Zr-2-methyl-2-butoxid, Zr-2,4-pentandionat, Zr-n-propoxid, Zr-2,2,fi,6-tetramethyl-3,5-heptandionat, Zr-trifluorpentandionat, Zrtrimethylsiloxid, Dicyclopentadienylzirkoniumdiethoxid, Zr-2-ethylhexanoat, Zrmethacrylat, Zr-dimethacrylat.

Als Komponente b) kann eine einzelne Verbindung oder - vorzugsweise - ein Gemisch unterschiedlicher Verbindungen vorhanden sein, die jede für sich der weiter oben gegebenen Definition der Komponente b) entsprechen. Dabei ist das Monomer oder Oligomer der Gruppe b) vorzugsweise ausgewählt aus Acrylsäure, Methacrylsäure, Crotonsäure, Vinylessigsäure, Maleinsäure, Fumarsäure und aus Monomeren oder Oligomeren, die mindestens eine derartige Säuregruppe aufweisen, wobei die Carbonsäuregruppen vollständig oder teilweise verestert sein können.

Dabei kann das Monomer oder Oligomer der Gruppe b) insbesondere ausgewählt sein aus aromatischen oder aliphatischen Urethan-Acrylat- oder Urethan-Methacrylat-Oligomeren sowie Addukten oder Copolymeren von Acrylsäure oder Methacrylsäure oder Hydroxyalkyl-Derivaten hiervon mit ungesättigten Dicarbonsäuren oder mit Anhydriden mehrbasischer Carbonsäuren oder Derivaten hiervon. Beispiele der genannten ungesättigten Dicarbonsäuren sind Maleinsäure und Fumarsäure. Ein spezielles Anhydrid mehrbasischer Carbonsäuren ist Bernsteinsäure-Anhydrid.

Vorzugsweise ist zumindest ein Teil der Komponente b) ein olefinisch ungesättigtes CoMonomer mit mindestens 2 olefinisch ungesättigten Doppelbindungen pro Molekül. Als Comonomere mit mindestens 2 olefinisch ungesättigten Doppelbindungen pro Molekül eignen sich eine Vielzahl von Comonomeren, z.B. Veresterungsprodukte von Alkanpolyolen, Polyesterpolyolen oder Polyetherpolyolen mit olefinisch ungesättigten Carbonsäuren wie z.B. Acrylsäure, Methacrylsäure, Itaconsäure, Crotonsäure, Maleinsäure, Maleinsäurehalbester, Fumarsäure, Fumarsäurehalbester oder reaktive carboxylgruppenhaltige Makromonomere oder deren Mischungen. Weiterhin eignen sich als Comonomere mit mindestens 2 reaktiven Doppelbindungen pro Molekül (Meth)acrylatfunktionelle Polysiloxane, (Meth)acrylat-funktionelle aliphatische, cycloaliphatische und/oder aromatische Polyepoxide sowie Polyurethan-Verbindungen mit reaktiven (Meth)acrylatgruppen. Typischerweise haben die vorgenannten Comonomeren mit mindestens 2 olefinisch ungesättigten Doppelbindungen pro Molekül Molekulargewichte im Bereich von 600 bis 50000, vorzugsweise zwischen 1000 und 10000.

Konkrete Beispiele für Alkan-Polyole sind 1,4-Butandiol, 1,6-Hexandiol, 1,8-Oktandiol sowie deren höhere Homologe, Glyzerin, Trimethylolpropan, Pentaerythrit sowie deren Alkoxylierungsprodukte.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Korksäure, 3,3-Dimethyl-glutarsäure,Terephthalsäure, Isophthalsäure, Hexahydrophthalsäure oder Dimerfettsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Dimerfettalkohol, Glyzerin oder Trimethylolpropan hergestellt werden können.

Eine weitere Gruppe der erfindungsgemäß einzusetzenden Polyol-Bausteine sind die Polyester auf der Basis von α -Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonat-polyole und Dimerdiole sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Für die vorliegende Erfindung eignen sich auch eine oder mehrere der radikalisch polymerisierbaren Polyurethan-Verbindungen (A), (B) und/oder (C) der allegemeinen Formel (III):

(H₂C=CR¹-C(=O)-O-R²-O-C(=O)-NH-)ₙ R³ (III)

worin
R¹ = Wasserstoff oder eine Methylgruppe,
R² = eine lineare oder verzweigte Alkylgruppe mit 2 bis 6 Kohlenstoffatomen oder Alkylenoxide mit 4 bis 21 Kohlenstoffatomen
und n = 1, 2 oder 3 ist,

(A) wobei R³ für n = 1 ist:.
   - eine Arylgruppe mit 6 bis 18 Kohlenstoffatomen,
   - eine geradkettige oder verzweigte Alkylgruppe mit 1 bis 18 Kohlenstoffatomen oder
   - eine Cycloalkylgruppe mit 3 bis 12 Kohlenstoffatomen;
(B) R³ für n = 2 ist:

   [-Q-N H-C(=O)]₂](-O-R⁴-O-C(=O)-NH-Q'-N H-C (=O))ₘ-O-R⁴-O-]

   wobei m = 0 bis 10 ist und
   R⁴
      a) ein Polycaprolactondiol-Rest
      b) ein Polytetrahydrofurfuryldiol-Rest oder
      c) ein Diol-Rest ist, der sich von einem Polyesterdiol ableitet, und ein Molekulargewicht von 1000 bis 20000 hat oder
(C) R³ für n = 3 ist:

   [-Q-NH-C(=O)-O-((CH₂)₅-C(=O))ₚ-]₃ R⁵,

   wobei R⁵ ein Triol-Rest eines 3 bis 6 Kohlenstoffatome enthaltenden, linearen oder verzweigten dreiwertigen Alkohols und p = 1 bis 10 ist und
   Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyldimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H12MDI), 1-Isocyanatomethyl-3-1socyanato-1,5,5-Trimethyl-cyclohexan (Isophoron-Diisocyanat, IPDI), Cyclohexan-1,4-Diisocyanat, hydriertes Xylylen-Diisocyanat (H6XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetra-methoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan, Butan-1,4-Diisocyanat sowie 1,12-Dodecandiisocyanat (C12DI).

Als Epoxidharz-Bausteine für die olefinisch ungesättigten Comonomeren mit mindestens zwei olefinisch ungesättigten Doppelbindungen pro Molekül eignen sich eine Vielzahl von Polyepoxiden, die mindestens 2 1,2-Epoxigruppen pro Molekül haben. Das EpoxidÄquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab. Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure. Weitere Epoxide leiten sich von den Epoxidierungsprodukten olefinisch ungesättigter cycloaliphatischer Verbindungen ab.

Konkrete Beispiele für erfindungsgemäß einzusetzende di-, tri- oder polyfunktionelle (Meth)acrylate sind die folgenden Verbindungen:
1,3-Butylenglykoldi(meth)acrylat, 1,4-Butandioldi(meth)acrylat, 1,6-Hexandiol di(meth)-acrylat, Bisphenol-A-Epoxid-Di(meth)acrylat, alkoxyliertes Bisphenol-A-Di(meth)acrylat, Polyalkylenglykoldi(meth)acrylat, Trialkylenglycoldiacrylat, Tetraalkylenglycoldi(meth)-crylat, Neopentylglycoldi(meth)acrylat, alkoxyliertes Neopentylglykoldi(meth)acrylat, Trialkylolalkantri(meth)acrylat, alkoxyliertes Trialkylolalkantri(meth)acrylat, Glycerinalkoxytri(meth)acrylat, Pentaerythritoltri(meth)acrylat, Tris-(2-hydroxyalkyl)isocyanurattri(meth)acrylat, säuregruppenhaltige Tri(meth)acrylatverbindungen, Trimethylolpropantri(meth)acrylat, Trisalkoxy-Trimethylolpropantri(meth)acrylat, Ditrimethylolpropantetra(meth)acrylat, Pentaerythritoltetra(meth)acrylat, alkoxyliertes Pentaerythritoltetra(meth)acrylat, Dipentaerythritolpenta(meth)acrylat, Dipentaerythritolhexa(meth)-acrylat, wobei "alkylen" ethylen, propylen oder butylen und "alkoxy" ethoxy, 1,2- oder 1,3-propoxy oder 1,4-butoxy bedeuten.

Zusätzlich können noch die folgenden (Meth)acrylat-Monomeren mitverwendet werden: Aminmodifizierte Polyetheracrylat-Oligomere, Carboxy-funktionalisierte multifunktionelle (Meth)acrylate, multifunktionelle Melaminacrylate, difunktionelle Siliconacrylate

Als monofuntionelle Comonomere können die folgenden (Meth)acrylate mit verwendet werden: Mono-Methacryloyloxyalkyl-succinat, n-/iso-Alkyl(meth)acrylat, Cyclohexyl-(meth)acrylat, 4-tert.-Butylcyclohexyl(meth)acrylat, Dihydrodicyclopentadienyl(meth)-acrylat, Tetrahydrofurfuryl(meth)acrylat, Isobornyl(meth)acrylat (IBOA), α-Carboxyethyl-(meth)acrylat (α-CEA); Mono(meth)acryloylalkylphthalate, -succinat, -maleinat; 2-(2-Ethoxyethoxy)-ethyl(meth)acrylat, 2-Phenoxyalkyl(meth)acrylat, Alkandiolmono(meth)-acrylat, Allyl(meth)acrylat, Hydroxyalkyl(meth)acrylat, 2,3-Epoxyalkyl(meth)acrylat, N,N-Dialkylaminoalkyl(meth)acrytat, N,N-Dialkyl(meth)acrylamid, Monoalkoxytrialkylenglycol(meth)acrylat, Monoalkoxyneopentyl-glycol-alkyloxylat-(meth)acrylat, Polyalkylenglycol(meth)acrylat, alkoxyliertes Nonylphenol(meth)acrylat, wobei die Alkylgruppen 1 bis 12 C-Atome aufweisen können und "alkoxy" ethoxy, 1,2- oder 1,3-propoxy oder 1,4-butoxy bedeuten.

Besonders bevorzugte Beispiele für die Komponente b) sind im Beispielteil angegeben.

Verbindungen der Gruppe c), die sowohl eine Polyether-Kette aus mindestens 5 Ethylenoxid- und/oder Propylenoxid-Einheiten als auch mindestens eine Carboxyl- oder Estergruppe mit mindestens einer polymerisierbaren Doppelbindung aufweisen, verleihen der durch Polymerisation ausgehärteten Zusammensetzung ihre antiadhäsiven Eigenschaften gegenüber Mikroorganismen. Art und Menge der Komponente c) muss dabei so gewählt werden, dass einerseits eine ausreichende antiadhäsive Wirkung gegenüber Mikroorganismen erzielt wird und dass andererseits die ausgehärtete Beschichtung die erforderliche Korrosionsschutz-Wirkung aufweist. Dies ist in der Regel dann gegeben, wenn die Verbindung der Gruppe c) eine Molmasse im Bereich von 250 bis 2 500, vorzugsweise im Bereich von 300 bis 650 aufweist. Dabei handelt es sich um Verbindungen mit einer Polyethylenglykol- und/oder Polypropylenglykolkette aus mindestens 5 derartigen Einheiten, bei der an einem oder beiden Kettenenden ein Carbonsäure-Rest mit mindestens einer polymerisierbaren Doppelbindung sitzt. Im allgemeinen wird der Carbonsäure-Rest durch eine Esterbindung mit der Polyether-Kette verbunden sein.

Beispiele für die Komponente c) sind Verbindungen der allgemeinen Formel (IV) oder (V):

CHR¹ = CR² - C(=O) - O - (CHR³ - CHR3- O)ₙ- R⁴ (IV)

oder

CHR¹ = CR² - (CH₂)ₚ - C(=O) - O - (CHR³ - CHR³- O)ₙ- R⁴ (V)

Dabei können R¹ und R² unabhängig voneinander bedeuten: H, eine Alkylgruppe mit 1 bis 12 C-Atomen, eine - COOR⁵ - Gruppe oder eine - (CH₂)q - COOR⁵ - Gruppe (mit jeweils R⁵ = H oder eine Alkylgruppe, vorzugsweise mit 1 bis 4 C-Atomen, und mit q = 1 bis 4),
R³ kann in beiden Fällen eine H-Atom bedeuten, oder einer der beiden Reste R³ stellt eine Methylgruppe, der andere ein H-Atom dar,
R⁴ kann bedeuten: H, eine Alkylgruppe, vorzugsweise mit 1 bis 12 C-Atomen und insbesondere mit 1 bis 4 C-Atomen, oder eine Phenyl- oder Benzylgruppe, die jeweils ihrerseits eine Alkylgruppe, vorzugsweise mit 1 bis 12 C-Atomen, tragen kann, oder R⁴ steht für eine weitere
CHR¹ = CR² - C(=O) - oder CHR¹ = CR² - (CH₂)ₚ - C(=O) - Gruppe, d.h., die Polyalkylenglykolkette O - (CHR³ - CHR³= O)ₙ kann an einem oder an beiden Enden mit der ungesättigten Carbonsäure verestert sein,
n ist definitionsgemäß mindestens 5 und wird vorzugsweise so gewählt, dass die Molmasse der Komponente c) im genannten bevorzugten Bereich liegt,
p ist eine Zahl im Bereich von 1 bis 4.

Hinsichtlich der C = C - Doppelbindung in den Formeln (IV) und (V) können die Verbindungen in der cis- oder in der trans-Form vorliegen, falls R¹ kein H-Atom bedeutet.

Vorzugsweise bedeuten in den Formeln (IV) und (V) sowohl R¹ als auch R² H-Atome, oder einer dieser beiden Reste bedeutet ein H-Atom, der andere eine Methylgruppe. Insbesondere ist die Polyalkylenglykolkette O - (CHR³ - CHR³- O)ₙ an einem oder an beiden Enden vorzugsweise verestert mit Acrylsäure, Methacrylsäure, Maleinsäure, Fumarsäure, Crotonsäure, Isocrotonsäure oder mit Vinylessigsäure, wobei die zweite Carboxylgruppe von Maleinsäure und Fumarsäure ihrerseits verestert sein kann, vorzugsweise mit einem Alkohol mit 1 bis 4 C-Atomen.

Konkrete Beispiele hierfür können dem Beispielsteil entnommen werden.

Die Komponente c) kann beispielsweise ethoxyliertes Nonylphenol-Acrylat darstellen oder enthalten. Die Komponente c) kann eine einzelne Verbindung oder ein Gemisch unterschiedlicher Verbindungen darstellen, die jeweils für sich die Definition der Komponente c) erfüllen. Weitere Beispiele sind im Beispielteil genannt.

Die in die ausgehärtete Beschichtung einpolymerisierte Komponente c) verleiht dieser in der Regel ausreichende antiadhäsive Eigenschaften gegenüber Mikroorganismen. Zusätzlich verbessert die Anwesenheit dieser Komponente überraschend den Korrosionsschutz, wie aus den Ausführungsbeispielen im Vergleich zu den Vergleichsbeispielen hervorgeht. Daher ist es empfehlenswert, diese Komponente zusätzlich zu den Komponenten a) und b) auch dann zu verwenden, wenn es nicht auf eine antiadhäsive Wirkung ankommt, sondern wenn allein eine gute Korrosionsschutzwirkung erzielt werden soll.

Aufgrund der antiadhäsiven Eigenschaften erschwert die Anwesenheit der Komponente c) die Anhaftung von Mikroorganismen an die beschichteten Oberflächen. Unter Mikroorganismen sind hierbei insbesondere eukariotische Einzeller und Protozoen, Bakterien, Pilze sowie Viren und Algen zu verstehen. Dies schließt bakterielle Endo- oder Exosporen sowie Sporen, die als Fortpflanzungsstrukturen bei Pilzen dienen, mit ein. Insbesondere sind unter Mikroorganismen Bakterien und Pilze zu verstehen. Besonders bedeutsame Pilze sind hierbei Hefen, Schimmelpilze, Dermatophyten und keratinophile Pilze. Im weiteren Sinne umfasst der Begriff "Mikroorganismen" auch organische Allergene wie beispielsweise Pollen, Hausstaub etc.

Dabei kann es vorteilhaft sein, die Beschichtung zusätzlich mit einer biozid oder biostatisch wirkenden Substanz (unter "biozider Wirkstoff' zusammengefasst) auszurüsten. Hierdurch können Mikroorganismen, die sich trotz der antiadhäsiven Eigenschaften auf der Beschichtung festsetzen, abgetötet oder zumindest an der Vermehrung gehindert werden. Dabei wählt man den bioziden Wirkstoff (vorzugsweise so aus, dass er durch Feuchtigkeit, beispielsweise durch Kondenswasser, nicht oder nur in sehr langen Zeiträumen aus der Beschichtung ausgelaugt wird. Hierdurch wird zum einen verhindert, dass die Wirkung zu rasch nachlässt. Zum anderen würde ein Auslaugen des bioziden Wirkstoffs zu "Lücken" in der Beschichtung führen, durch die ein korrosiver Angriff erleichtert werden kann.

Dem wird dadurch Rechnung getragen, dass die erfindungsgemäße Zusammensetzung zusätzlich als Komponente e) einen bioziden Wirkstoff enthält, der vorzugsweise in Wasser bei Raumtemperatur wenig löslich ist, insbesondere zu nicht mehr als 10 g/l besonders zu nicht mehr als 1 g/l löslich ist.

Mikrobizide Wirkstoffe (Algizide, Fungizide, Bakterizide, Viruzide) zeichnen sich dadurch aus, dass sie Mikroorganismen, abhängig von ihrer Konzentration, der Einwirk-Temperatur und -Zeit, durch Schädigung der Zellmembranen oder Blockierung lebensnotwendiger Stoffwechselvorgänge abtöten, bzw. die Abtötung oder Zerstörung sowie die Hemmung oder Bekämpfung des Wachstums oder der Vermehrung von Bakterien, Pilzen (einschließlich Hefen und Schimmelpilzen) und Algen in ruhenden, unreifen Entwicklungsstufen und/oder im reifen Zustand bewirken sowie Viren inaktivieren. Hierdurch hemmen sie die Schadwirkung von Mikrorganismen. Beispiele sind aldehydische Wirkstoffe, quaternäre Ammoniumverbindungen und Isothiazolon-Verbindungen. Konkrete Beispiele hierfür sowie weitere Beispiele biozider Wirkstoffe können der Offenlegungsschrift WO 2004/049800 und den dort zitierten Standardwerken entnommen werden.

In einer Ausführungsform stellt der biozide Wirkstoff eine organische Verbindung dar, die in der ausgehärteten Beschichtung eingebunden ist. Dies setzt eine Verträglichkeit der organischen Verbindung mit dem Polymer-Netzwerk der ausgehärteten Beschichtung voraus. Beispiele hierfür sind 10,10'-Oxybispherioxarsin, Zinc Omadine (Hersteller: Olin Chemicals), Zinc Tryithione, N-(Trichloromethylthio)phthalimid, 4,5-Dichloro-2-n-octyl-4-isothiazolon-3-on, 2-n-Octyl-4-isothiazolin-3-on, N-(Trichloromethylthio)-4-cyclohexen-1,2-dicarboximid und 2,3,5,6-Tetrachloro-4-(methylsulfonyl)pyridin.

In einer weiteren Ausführungsform stellt der biozide Wirkstoff eine partikelförmige anorganische Verbindung oder ein partikelförmiges Metall dar. Die mittlere Partikelgröße, die beispielsweise elektronenmikroskopisch oder insbesondere durch Lichtstreumethoden bestimmt werden kann, soll dabei um nicht mehr als 50 % größer sein als die angestrebte Dicke der ausgehärteten Beschichtung. Vorzugsweise ist die mittlere Partikelgröße kleiner als 1 µm und liegt, besonders bevorzugt, im sogenannten nanoskaligen Bereich, d. h. im Bereich unter 900 nm und insbesondere unter 500 nm. Beispiele hierfür sind partikelförmiges, insbesondere nanoskaliges Zinkoxid oder metallisches Silber.

In einer weiteren Ausführungsform enthält der biozide Wirkstoff biozide Metallionen, vorzugsweise ausgewählt aus Zinn-, Zink-, Kupfer- und Silberionen. Diese können in einer weiteren bevorzugten Ausführungsform an ein zum Kationenaustausch befähigtes organisches oder anorganisches Gerüst gebunden und durch Alkalimetallionen austauschbar sein. Beispiele anorganischer Gerüste, an die die bioziden Metallionen gebunden sein können, sind partikelförmige Kieselsäuren, Zeolithe oder Zirkonphosphate. Besonders geeignet sind silberhaltige Zeolithe oder silberhaltige Zirkonphosphate. Weiterhin sind silberhaltige Glaskugeln entsprechender Teilchengröße geeignet.

Vorzugweise werden die erfindungsgemäßen Zusammensetzungen durch einen UV- oder Elektronenstrahl-Härtungsprozeß ausgehärtet. Je nach eingesetzten Initiatoren und Monomeren kann dieser Aushärtungsprozeß nach einem radikalischen oder kationischen Polymerisations-Prozeß ablaufen.

Als Initiatoren für diese radikalische bzw. kationische Polymerisation (Komponente d)) eignen sich beispielsweise die folgenden Initiatoren: 1-Hydroxycyclohexylphenylketon, (5,2,4-Cyclopentadien-1-yl)-[(1,2,3,4,5,6-)-(1-methyl-ethyl)-benzol]eisen(1+)-hexafluorophosphat(1-), 2-Benzyldimethylamino-1-(4-morpholinophenyl)-butanon-1, Benzildimethylketal-dimethoxyphenylacetophenon, Bis(5-2,4-cyclopentadien-1-yl)-bis[2,6-difluoro-3-(1H-pyrrol-1-yl)phenyl]-titan, Bis(2,4,6-trimethylbenzoyl)-phenylphosphinoxid (BAPO2), 2-Methyl-1-[4-(methylthio)-phenyl]-2-morpholino-propanon-1, 1-(4-(1-Methylethyl)-phenyl)-2-hydroxy-2-methyl-1-propan-1-on, 2-Hydroxy-2-methyl-1-phenylpropan-1-on, 1,2-Diphenylethan-1,2-dion, 1-[4-(2-Hydroxyethoxy)-phenyl]-2-hydroxy-2-methyl-1-propan-1-on, (2,4,6-Trimethylbenzoyl)diphenylphosphinoxid, Hydroxybenzylphenylketon, Triarylsul-fonium-hexafluoroantimonatsalze, Triarylsulfonium-hexafluorophosphatsalze, Oligo-(2-hydroxy-2-methyl-1-[4-(1-methylvinyl)phenyl]propanon), 1-Propanon-2-hydroxy-2-methyl-1-[4-(1-methylethenyl)phenyl]-homopolymer, Phosphonsäure-benzoyl-bis(2,6-dimethylphenyl)ester, Benzophenon, Methyl-ortho-benzoylbenzoat, Methylbenzoylformat, 2,2-Diethoxyacetophenon, 2,2-Di-sec-butoxyacetophenon, [4-(4-methylphenylthio)-phenyl]phenylmethanon-4-benzoyl-4'-methyldiphenylsulfid, p-Phenylbenzophenon, 2-Isopropylthioxanthon, 2-Methylanthrachinon, 2-Ethylanthrachinon, 2-Chloroanthrachinon, 1,2-Benzanthrachinon, 2-t-Butylanthrachinon, 1,2-Benzo-9,10-anthrachinon, Benzil, Benzoin, Benzoinmethylether, Benzoinethylether, Benzoinisopropylether, alpha-Methylbenzoin, alpha-Phenylbenzoin, Michler s Keton, Benzophenon, 4,4'-Bis-(diethylamino)benzophenon, Acetophenon, Diethoxyphenylacetophenon, Thioxanthon, Diethylthioxanthon, 1,5-Acetonaphtalin, Ethyl-p-dimethylaminobenzoat, Benzilketone, 2,4,6-Trimethylbenzoyldiphenyl-phosphinoxide, Benzilketal-(2,2-dimethoxy-1,2-diphenylethanon), 1-Hydroxycyclohexylphenylketon, 2-Methyl-1[4-(methylthio)phenyl]-2-morpholinopropanon-1 und/oder 2-Hydroxy-2-methyl-1-phenyl-propan-1 und/oder deren Mischungen. Diese können ggf. mit weiteren Radikalinitiatoren vom Peroxid- oder Azotyp und/oder mit aminischen Beschleunigern kombiniert werden.

Wenn vorzugsweise die kationische Polymerisation Verwendung finden soll, können auch Vinylether als Comonomere eingesetzt werden.

Beispiele für derartige Vinylether sind Vinylmethylether, Vinylethylether, Vinylpropylether, Vinylisobutylether, Vinyldodecylether, Vinyloctadecylether, Vinylcyclohexylether, Vinyl-4-hydroxybutylether, Butandiol-1,4-divinylether, 1,4-Cyclohexandimethanoldivinylether, Diethylenglykoldivinylether, Triethylenglykoldivinylether, aber auch die folgenden Vinylverbindungen N-Vinylpyrrolidon, Vinylcaprolactam, 1-Vinylimidazol, Divinylethylenharnstoff.

Konkrete Beispiele für Polymerisationsinitiatoren sind die im Beispielteil genannte Mischung aus 2-Hydroxy-2-methyl-1-phenyl-propanon mit 1-Hydroxyethylcyclohexylphenylketon sowie Bis-(2,4,6-trimethyl-phenyl)-acylphenylphosphinoxid.

Vorzugsweise enthält die erfindungsgemäße Zusammensetzung die Komponenten in folgenden Anteilen in Gew.-%, bezogen auf die gesamte Zusammensetzung:
Komponente a): 2 bis 49,99, vorzugsweise 7 bis 35 Gew.-%,
Komponente b): 50 bis 90 Gew.-%,
Komponente c): 0,01 bis 20, vorzugsweise 0,1 bis 10,
   insbesondere 0,5 bis 6 Gew.-%,
Komponente d): 0 bis 10, vorzugsweise 1 bis 8,
   insbesondere 2 bis 6 Gew.-%,
Komponente e): 0 bis 15, vorzugsweise 0,5 bis 12 Gew.-%.

Dabei können die einzelnen Komponenten a) bis e) jeweils aus einer einzigen Verbindung bestehen, oder sie können Mischungen unterschiedlicher Verbindungen darstellen. Letzteres ist insbesondere für Komponente b) und Komponente c) die Regel. Wie weiter oben erläutert, kann die Komponente a) als Reaktionsprodukt einer ursprünglich eingesetzten Metallverbindung mit insbesondere einer der Komponenten b) und c) vorliegen. Die Komponente a) stellt dann in der Regel ebenfalls ein Gemisch unterschiedlicher Verbindungen dar.

Enthält die Komponente a) keine an das Metall gebundene organische Gruppe, die eine polymerisierbare Kohlenstoff-Kohlenstoff-Doppel- oder -Dreifachbindung aufweist, so beträgt deren Anteil in der Zusammensetzung vorzugsweise 2 bis 20 und insbesondere 5 bis 15 Gew.-%. Dies gilt beispielsweise für den Fall, dass die Komponente a) ein Alkoholat oder ein Acetylacetonat eines der genannten Metalle darstellt. Weist die Metallverbindung a) jedoch mindestens eine an das Metall gebundene organische Gruppe mit einer polymerisierbaren Kohlenstoff-Kohlenstoff-Doppel- oder -Dreifachbindung auf, so kann sie in einem höheren Mengenanteil vorliegen, beispielsweise von bis zu 49,99 Gew.-% und vorzugsweise von 7 bis 35 Gew.-%.

Dem Fachmann ist geläufig, dass die vorstehend genannten Komponenten, insbesondere die metallorganischen Verbindungen, Reaktionen miteinander eingehen können und als technische Produkte Verunreinigungen enthalten können, so dass sie in der Behandlungszusammensetzung in der Form vorliegen, die unter den genannten Bedingungen, dem thermodynamischen Gleichgewicht entsprechen, sofern sich dieses bereits eingestellt hat. In diesem Sinne sind die Tabellen im Beispielteil zu verstehen. Diese geben an, welche Rohstoffe in welchen Mengen zur Herstellung der erfindungsgemäßen Zusammensetzung verwendet wurden. Dabei ist zu erwarten, dass einzelne Komponenten beim Vermischen der Rohstoffe miteinander reagieren. Beispielsweise können sich aus Alkoholen und Carbonsäuren Ester bilden. Erwünschtenfalls kann eine derartige Reaktion durch Erwärmen der Mischung während der Herstellung herbeigeführt werden. Dies gilt insbesondere für die als Alkoholat eingesetzte Metallverbindung a), beispielsweise Titan(tetraisopropoxylat). Das Alkoholat wird zumindest teilweise mit weiteren Komponenten der Mischung unter Abspaltung des Alkohols reagieren. Der abgespaltene Alkohol kann im Produkt verbleiben, wobei er dessen Viskosität reduziert. Der entstehende Alkohol kann jedoch auch durch Erwärmen und/oder Evakuieren abgezogen werden, falls man Wert darauf legt, dass beim Aushärten der Beschichtung möglichst wenig Lösungsmittel verdampfen muss.

Weiterhin ist dem Fachmann bekannt, dass bei der Alkoxylierung von Alkoholen oder Carbonsäuren stets Produktgemische aus Mblekülen mit unterschiedlichem Alkoxylierungsgrad entstehen. Die Angabe eines Alkoxylierungsgrades versteht er daher als "mittlerer Alkoxylierungsgrad". Dies trifft auch auf die im Beispielsteil genannte Ethoxylate zu.

Die vorstehend genannten Komponenten a) bis e) stellen vorzugsweise die Hauptmenge des erfindungsgemäßen Mittels dar, d. h. ihre Anteile addieren sich vorzugsweise zu mindestens 80 Gew.-% und insbesondere zu mindestens 90 Gew.-% der gesamten Zusammensetzung. Es ist also bevorzugt, dass die Zusammensetzung nicht mehr als 20 Gew.-% und insbesondere nicht mehr als 10 Gew.-% weitere Komponenten enthält. Erwünschtenfalls können maximal 10 Gew.-%, vorzugsweise maximal 5 Gew.-% bezogen auf die gesamte Zusammensetzung weitere Komponenten enthalten sein, die vorzugsweise ausgewählt sind aus Haftvermittlern, insbesondere Silanen, und Korrosionsschutzmitteln, vorzugsweise ausgewählt aus der Gruppe umfassend: organische Phosphate und Phosphonate, Silicate, insbesondere Schichtsilicate, Alkoxysilane und deren Hydrolyse- und Kondensationsprodukte, Verwendet man Schichtsilikate wie beispielsweise Montmorillonite oder Talk, setzt man diese vorzugsweise in nanoskaliger Form ein, also mit einer mittleren Teilchengröße unterhalb von 1 um. Als Alkoxysilane können beispielsweise Tetraalkoxysilane, insbesondere Tetraethoxysilan, eingesetzt werden. Unter Wasseraufnahme und Abspaltung von Alkohol können diese zu Kieselsäuren und deren Kondensationsprodukten reagieren.

Unabhängig davon, ob die Zusammensetzung zusätzlich solche Haftvermittler und Korrosionsschutzmittel enthält, ist es weiterhin bevorzugt, dass die Zusammensetzung nicht mehr als 10 Gew.-%, vorzugsweise nicht mehr als 5 Gew.-% an Komponenten wie beispielsweise Verdünnungs- oder Lösungsmittel enthält, die beim Aushärten durch Polymerisation nicht in die entstehende Schicht eingebaut werden, sondern stattdessen abgedampft werden müssen. Insbesondere ist es bevorzugt, dass die Zusammensetzung nicht mehr als 2 Gew.-% an solchen beim Aushärten flüchtigen Komponenten enthält. Wie weiter oben erläutert, können derartige flüchtige Komponenten in die Zusammensetzung gelangen, wenn diese einen Bestandteil der Komponente a) bilden und beim Herstellen der Zusammensetzung durch Reaktion der Komponente a) mit den Komponenten b) und/oder c) freigesetzt werden. Dies ist beispielsweise der Fall, wenn die Komponente a) ein Alkoholat oder ein Acetylacetonat eines der genannten Metalle darstellt. Hieraus kann durch Reaktion mit den Carbonsäuregruppen-haltigen Komponenten b) und/oder c) Alkohol oder Acetylaceton freigesetzt werden. Übersteigt der auf diese Weise hervorgerufene Gehalt der Zusammensetzung an flüchtigen Komponenten die erwünschten Obergrenzen, so kann dieser durch geeignete technische Maßnahmen wie beispielsweise Abziehen unter Erwärmen und/oder Evakuieren auf die bevorzugten Höchstmengen vermindert werden.

In einem zweiten Aspekt betrifft die vorliegende Erfindung ein Verfahren gemäß Ansprüche 19 bis 21 zur Beschichtung von Metallband, dadurch gekennzeichnet, dass man ein erfindungsgemäßes Beschichtungsmittel in einer solchen Schichtdicke auf das laufende Metallband aufbringt und durch Bestrahlung mit energiereicher Strahlung, vorzugsweise mit Elektronenstrahlung oder mit UV-Strahlung, aushärtet, dass man nach dem Aushärten eine Schicht mit einer Dicke im Bereich von 1 bis 10 µm, vorzugsweise 2 bis 6 µm enthält.

Bei diesem Verfahren wird die Zusammensetzung in an sich bekannter Weise durch Walzenapplikation (Chem-Coating), Abstreifen, Filmziehen (Curtain-flow-Verfahren), Tauchen/Abquetschen oder Spritzen/Abquetschen auf ein Metallband aufgebracht. Die Anwendung erfolgt bei Temperaturen zwischen 10 und 60°C, vorzugsweise zwischen 15 und 45°C.

Die Bildung des Films, die Vernetzung dieses Films sowie die Verankerung auf der metallischen Oberfläche findet bevorzugt durch an sich bekannte UV-Bestrahlung oder Elektronen-Bestrahlung statt. Die Bestrahlungsdauer liegt dabei zwischen 0,1 und 120 Sekunden, vorzugsweise zwischen 0,5 und 30 Sekunden. Erfolgt die erfindungsgemäße Behandlung unmittelbar nach einer metallischen Oberflächenveredlung, z.B. einer elektrolytischen Verzinkung oder einer Schmelztauchverzinkung von Stahlbändern, so können die Bänder ohne vorherige Reinigung mit der erfindungsgemäßen Behandlungslösung bzw.- dispersion in Kontakt gebracht werden. Wurden die zu behandelnden Metallbänder vor der erfindungsgemäßen Beschichtung jedoch gelagert und/oder transportiert, so sind sie in der Regel mit Korrosionsschutzölen versehen oder zumindest so weitgehend verschmutzt, dass eine Reinigung vor der erfindungsgemäßen Beschichtung erforderlich ist. Dies kann mit gebräuchlichen schwach bis stark alkalischen Reinigern, bei Aluminium und seinen Legierungen auch mit sauren Reinigern erfolgen.

Vorzugsweise werden-die erfindungsgemäßen Zusammensetzungen durch ultraviolette (UV) Strahlung oder durch Elektronenstrahlung gehärtet bzw. vernetzt. Geeignete UV-Strahlung hat Wellenlängen zwischen 200 und 800 nm, vorzugsweise zwischen 250 und 450 nm. Die Strahlungsintensität richtet sich dabei nach der gewünschten Applikationsgeschwindigkeit, dem Initiatorsystem und der Comonomerzusammensetzung und kann durch den Fachmann leicht bestimmt werden.

Für die alternativ zu verwendende Elektronenstrahlung kann jede konventionelle Elektronenstrahlquelle eingesetzt werden. Beispielhaft genannt seien Beschleuniger vom Typ des van de Graaff-Generators, Linearbeschleunigers, Resonanztransformators, oder Dynatrons. Die Elektronenstrahlung hat dabei eine Energie von etwa 50 bis 1000 keV, vorzugsweise zwischen 100 und etwa 300 keV, die resultierend Strahlendosis liegt zwischen etwa 0,1 und 100 Mrad.

Das erfindungsgemäße Beschichtungsverfahren stellt vorzugsweise die einzige Maßnahme zur Korrosionsschutzbehandlung der Metalloberfläche dar. Es ist also nicht erforderlich, dass die Metallband-Oberfläche vor dem Aufbringen des erfindungsgemäßen Beschichtungsmittels einer anderen Korrosionsschutz-Behandlung unterzogen wird. Das erfindungsgemäße Beschichtungsmittel kann also unmittelbar auf die frisch erzeugte oder gereinigte Metallband-Oberfläche aufgetragen werden. Weiterhin ist es bevorzugt, dass die Beschichtung der Metallband-Oberfläche mit der erfindungsgemäßen Zusammensetzung die einzige Beschichtung überhaupt darstellt. Es ist also weder erforderlich noch erwünscht, dass das Metallband nach dem Aufbringen und Aushärten des erfindungsgemäßen Beschichtungsmittels mit einer weiteren Beschichtung überbeschichtet wird. Dies erklärt sich dadurch, dass durch eine Überbeschichtung die erwünschten antiadhäsiven Eigenschaften gegenüber Mikroorganismen verloren gingen.

Mit der erfindungsgemäßen Zusammensetzung bzw. dem erfindungsgemäßen Beschichtungsverfahren können insbesondere Metallbänder behandelt werden, die ausgewählt sind aus Bänder von,Zink, Stahl, verzinktem oder legierungsverzinktem Stahl, Edelstahl oder aus Aluminium und seinen Legierungen.

Schließlich betrifft die Erfindung ein beschichtetes Metallband gemäß Anspruch 22 oder ein hieraus abgeteiltes Metallblech, das ggf. umgeformt sein kann, das eine Beschichtung aufweist, die nach dem vorstehend beschriebenen Verfahren erhältlich ist. Wie eingangs erwähnt, handelt es sich hierbei insbesondere um Bauteile von Klimaeinrichtungen oder Lüftungskanälen oder um Metallbänder, die für die Herstellung solcher Bauteile vorgesehen sind.

### Ausführungsbeispiele

Die folgenden Tabellen geben als Vergleichszusammensetzung eine UV-polymerisierbare Zusammensetzung nach Stand der Technik gemäß WO 00/69978 sowie erfindungsgemäße Zusammensetzungen wieder. Die Tabellen enthalten Art und Menge (in Gew.-% bezogen auf die Summe aller genannten Komponenten), die zum Herstellen der erfindungsgemäßen Zusammensetzung miteinander vermischt wurden. Das Vermischen kann im Temperaturintervall zwischen Raumtemperatur und 100 °C erfolgen. Wie weiter oben erläutert, ist zu erwarten, dass einzelne Komponenten der Mischung hierbei miteinander reagieren. Dies gilt insbesondere für das Ti-Isopropoxylat, das als Komponente a) bzw. als Ausgangskomponente hierfür eingesetzt wurde. Dieses wird bei der Herstellung der Mischung mit den ebenfalls vorhandenen Carbonsäuren unter Freisetzung von Isopropanol reagieren. Führt man das Vermischen bei erhöhter Temperatur durch, wird zumindest ein Teil des freigesetzten Isopropanols verdampfen. Die anwendungsfertige Zusammensetzung entspricht daher nur angenähert der Summe der zu ihrer Herstellung eingesetzten Einzelkomponenten. Auch Bernsteinsäureanhydrid kann mit den weiteren Komponenten reagieren und hierdurch eingebunden werden, beispielsweise mit Hydroxyethylmethacrylat.

Als Substrat für die Beschichtungen dienten Bleche aus schmelztauch-beschichtetem Stahl. Diese wurden zunächst mit einem kommerziellen Reiniger (Ridoline^{R} 1340, Henkel KGaA) gereinigt. Auf die gereinigten Bleche wurden die Zusammensetzungen aufgetragen, die beim Zusammenmischen der Komponenten gemäß nachfolgenden Tabellen erhalten wurden. Der Auftrag erfolgte mittels einem Roll-Coater bei Raumtemperatur in einer solchen Schichtdicke, dass nach dem Aushärten ein Überzug mit einer Dicke von 5 µm erhalten wurde. Die Zusammensetzungen wurden jeweils 2 mal bei einer simulierten Bandgeschwindigkeit von 15 m/min mit UV-Strahlung ausgehärtet. Die so beschichteten Bleche wurden ohne weitere Überbeschichtung auf Korrosionsschutzeigenschaften sowie auf Anhaftung von Mikroorganismen untersucht. In den Tabellen sind die Weißrostgrade (WRi) und die Schwarzrostgrade (SRi) nach der jeweils angegebenen Testzeit (h = Stunden) angegeben. Ein Rostgrad von 0 bedeutet keine Korrosion, ein Rostgrad von 5 vollständige Korrosion. Je geringer der Rostgrad, desto geringer die Korrosion.

Zusätzlich zu den Korrosionsschutzprüfungen wurden Adhäsionstests für Mikroorganismen (hier: Staphylococcus aureus) durchgeführt. Hierzu wurden mit den genannten Zusammensetzungen beschichtete Metall-Prüfkörper vom Format 2,2 x 2,2 cm zunächst mit 70 %igem Methylalkohol für 10 Minuten desinfiziert und danach mit sterilem und destilliertem Wasser gewaschen und getrocknet. Die so vorbereiteten Prüfmuster wurden mit einer Keimsuspension überschichtet und für 1 Stunde inkubiert. Anschließend wurden die Keimsuspensionen abgesaugt und die Prüfkörper 2 mal gewaschen. Nach Überführen in sterile Prüfplatten wurden die Prüfkörper mit Nähragar überschichtet und anschließend für 48 Stunden bei 30 °C inkubiert. Das Ausmaß von Keimwachstum, das auf die Besiedelung der Prüfkörper mit Keimen zurück schließen lässt, wird relativ zu einem mit der Vergleichszusammensetztung beschichteten Prüfkörper in % angegeben. Dabei wird die Keimbelastung des mit der Vergleichszusammensetzung beschichteten Prüfkörpers als 100 % gesetzt.

Die folgenden Tabellen enthalten die Zusammensetzungen (Ansatzverhältnisse vor dem Mischen in Gew.-% bezogen auf die Gesamtmenge der Einsatzstoffe) und die hiermit erhaltenen Prüfergebnisse.

**Tabelle 1: Zusammensetzungen (Gew.-% bezogen auf Mischungsansatz, vergleiche Beschreibung) und Prüfergebnisse (Neutraler Salzsprühtest = NSS, Weißostgrad (WRi) und Schwarzrostgrad (SRi) nach Prüfdauer in Stunden (= h)**

| | Vergl. 1 | Bsp. 1 | Bsp. 2 | Bsp. 3 | Bsp. 4 | Bsp. 5 | Bsp. 6 | | | | | | | | |
|---|---|---|---|---|---|---|---|---|---|---|---|---|---|---|---|
| Aromatisches Urethanacrylat Oligomer | 25.60 | 25.09 | 24.32 | 25.09 | 24.32 | 25.09 | 24.32 | | | | | | | | |
| Aliphatisches Urethan-acrylat Oligomer | 25.60 | 25.09 | 24.32 | 25.09 | 24.32 | 25.09 | 24.32 | | | | | | | | |
| Bernsteinsäureanhydrid | 13,9 | 13,64 | 13,22 | 13,64 | 13,22 | 13,64 | 13,22 | | | | | | | | |
| Hydroxyethylmethacrylat ("HEMA") | 18,1 | 17,72 | 17,18 | 17,72 | 17,18 | 17,72 | 17,18 | | | | | | | | |
| phosphoryliertes Hdroxyethylmethacrylat | 1,32 | 1,29 | 1,26 | 1,29 | 1,26 | 1,29 | 1,26 | | | | | | | | |
| Ti tetra-isopropoxylat | 9.00 | 8.82 | 8.55 | 8.82 | 8.55 | 8.82 | 8.55 | | | | | | | | |
| Ethoxyliertes (15 EO) Trimethylolpropan | 1,24 | 1,22 | 1,18 | 1,22 | 1,18 | 1,22 | 1,18 | | | | | | | | |
| Acrylsäure | 0,34 | 0,33 | 0,32 | 0,33 | 0,32 | 0,33 | 0,32 | | | | | | | | |
| Mischung von 2-Hydroxy-2-methyl-1-phenylpropanon und 1-Hydroxycyclohexylphenylketon | 4.60 | 4.51 | 4.37 | 4.51 | 4.37 | 4.51 | 4.37 | | | | | | | | |
| Bis-(2,4,6-trimethyl-phenyl)-acylphenyl-phosphinoxid | 0.30 | 0.29 | 0.28 | 0.29 | 0.28 | 0.29 | 0.28 | | | | | | | | |
| Polyethylenglycolmonoacrylat 375 g/mol | - | 2.00 | 5.00 | - | - | - | - | | | | | | | | |
| Polypropylenglycolmonoacrylat 400 g/mol | - | - | - | 2.00 | 5.00 | - | - | | | | | | | | |
| Ethoxyliertes (8EO) Nonylphenol-acrylat 626 g/mol | - | - | - | - | - | 2.00 | 5.00 | | | | | | | | |

| NSS | | Vergleich | | Bsp. 1 | | Bsp. 2 | | Bsp. 3 | | Bsp. 4 | | Bsp. 5 | | Bsp. 6 | |
|---|---|---|---|---|---|---|---|---|---|---|---|---|---|---|---|
| 24 h | WRi SRi | 0 | 0 | 0 | 0 | 0 | 0 | 0 | 0 | 0 | 0 | 0 | 0 | 0 | 0 |
| 48 h | WRi SRi | 2.0 | 0 | 1.0 | 0 | 1.0 | 0 | 1.0 | 0 | 0 | 0 | 0 | 0 | 1.0 | 0 |
| 72 h | WRi SRi | 2.0 | 1.0 | 2.0 | 0 | 1.0 | 0 | 1.0 | 0 | 1.0 | 0 | 1.0 | 0 | 1.0 | 0 |
| 96 h | WRi SRi | 3.0 | 1.0 | 2.0 | 1.0 | 1.0 | 1.0 | 1.0 | 1.0 | 1.0 | 1.0 | 1.0 | 1.0 | 1.0 | 1.0 |
| 120 h | WRi SRi | 4.0 | 1.0 | 3.0 | 1.0 | 2.0 | 1.0 | 2.0 | 1.0 | 2.0 | 1.0 | 1.0 | 1.0 | 2.0 | 1.0 |
| 144 h | WRi SRi | 5.0 | 2.0 | 3.0 | 2.0 | 2.0 | 2.0 | 2.0 | 2.0 | 2.0 | 1.0 | 2.0 | 1.0 | 2.0 | 2.0 |
| 168 h | WRi SRi | - | | 3.0 | 2.0 | 2.0 | 2.0 | 2.0 | 2.0 | 2.0 | 1.0 | 2.0 | 1.0 | 2.0 | 2.0 |
| 192 h | WRi SRi | - | | 3.0 | 3.0 | 3.0 | 2.0 | 3.0 | 2.0 | 2.0 | 2.0 | 2.0 | 1.0 | 3.0 | 2.0 |
| 216 h | WRi SRi | - | | 4.0 | 3.0 | 3.0 | 3.0 | 3.0 | 3.0 | 3.0 | 2.0 | 2.0 | 2.0 | 3.0 | 2.0 |
| 240 h | WRi SRi | - | | 4.0 | 3.0 | 4.0 | 3.0 | 3.0 | 3.0 | 3.0 | 2.0 | 2.0 | 2.0 | 3.0 | 3.0 |
| 264 h | WRi SRi | - | | 5.0 | 3.0 | 4.0 | 3.0 | 4.0 | 3.0 | 4.0 | 2.0 | 3.0 | 2.0 | 4.0 | 3.0 |
| 288 h | WRi SRi | - | | - | | 4.0 | 3.0 | 4.0 | 3.0 | 4.0 | 3.0 | 4.0 | 3.0 | 4.0 | 3.0 |
| 312 h | WRi SRi | - | | - | | 5.0 | 3.0 | 5.0 | 3.0 | 5.0 | 3.0 | 5.0 | 3.0 | 5.0 | 3.0 |
| 336 h | WRi SRi | - | | - | | - | | - | | - | | - | | - | |
| 360 h | WRi SRi | - | | - | | - | | - | | - | | - | | - | |

**Tabelle 2: Weitere Zusammensetzungen und Prüfergebnisse analog Tabelle 1**

| | Bsp. 7 | Bsp. 8 | Bsp. 9 | Bsp. 10 | Bsp. 11 | Bsp. 12 | | | | | | | |
|---|---|---|---|---|---|---|---|---|---|---|---|---|---|
| Aromatisches Urethanacrylat Oligomer | 25.09 | 24.32 | 25.09 | 24.32 | 25.09 | 24.32 | | | | | | | |
| Aliphatisches Urethanacrylat Oligomer | 25.09 | 24.32 | 25.09 | 24.32 | 25.09 | 24.32 | | | | | | | |
| Bernsteinsäureanhydrid | 13,64 | 13,22 | 13,64 | 13,22 | 13,64 | 13,22 | | | | | | | |
| Hydroxyethylmethacrylat ("HEMA") | 17,72 | 17,18 | 17,72 | 17,18 | 17,72 | 17,18 | | | | | | | |
| phosphoryliertes Hdroxyethylmethacrylat | 1,29 | 1,26 | 1,29 | 1,26 | 1,29 | 1,26 | | | | | | | |
| Ti tetra-isopropoxylat | 8.82 | 8.55 | 8.82 | 8.55 | 8.82 | 8.55 | | | | | | | |
| Ethoxyliertes (15 EO) Trimethylolpropan | 1,22 | 1,18 | 1,22 | 1,18 | 1,22 | 1,18 | | | | | | | |
| Acrylsäure | 0,33 | 0,32 | 0,33 | 0,32 | 0,33 | 0.32 | | | | | | | |
| Mischung von 2-Hydroxy-2-methyl-1-phenylpropanon und 1-Hydroxycyclohexyl-phenylketon | 4.51 | 4.37 | 4.51 | 4.37 | 4.51 | 4.37 | | | | | | | |
| Bis-(2,4,6-trimethyl-phenyl)-acylphenyl-phosphinoxid | 0.29 | 0.28 | 0.29 | 0.28 | 0.29 | 0.28 | | | | | | | |
| Polyethylenglycol-diacrylat 408 g/mol | 2.00 | 5.00 | - | - | - | - | | | | | | | |
| Polyethylenglycolmonoacrylat 336 g/mol | - | - | 2.00 | 5.00 | - | - | | | | | | | |
| Polyethylenglycol-diacrylat 308 g/mol | - | - | - | - | 2.00 | 5.00 | | | | | | | |

| NSS | | Bsp. 7 | | Bsp. 8 | | Bsp. 9 | | Bsp. 10 | | Bsp. 11 | | Bsp. 12 | |
|---|---|---|---|---|---|---|---|---|---|---|---|---|---|
| 24 h | WRi SRi | 0 | 0 | 0 | 0 | 0 | 0 | 0 | 0 | 0 | 0 | 0 | 0 |
| 48 h | WRi SRi | 1.0 | 0 | 1.0 | 0 | 1.0 | 0 | 1.0 | 0 | 2.0 | 0 | 2.0 | 0 |
| 72 h | WRi SRi | 1.0 | 0 | 1.0 | 0 | 1.0 | 1.0 | 2.0 | 1.0 | 2.0 | 1.0 | 2.0 | 1.0 |
| 96 h | WRi SRi | 1.0 | 1.0 | 1.0 | 1.0 | 2.0 | 1.0 | 3.0 | 1.0 | 2.0 | 2.0 | 2.0 | 2.0 |
| 120 h | WRi SRi | 2.0 | 1.0 | 2.0 | 1.0 | 4.0 | 1.0 | 4.0 | 3.0 | 2.0 | 2.0 | 2.0 | 2.0 |
| 144 h | WRi SRi | 3.0 | 2.0 | 2.0 | 2.0 | 4.0 | 2.0 | 4.0 | 3.0 | 3.0 | 3.0 | 2.0 | 2.0 |
| 168 h | WRi SRi | 3.0 | 3.0 | 3.0 | 3.0 | 4.0 | 2.0 | 5.0 | 3.0 | 3.0 | 3.0 | 3.0 | 2.0 |
| 192 h | WRi SRi | 4.0 | 3.0 | 3.0 | 3.0 | 4.0 | 2.0 | - | | 4.0 | 3.0 | 3.0 | 2.0 |
| 216 h | WRi SRi | 4.0 | 3.0 | 4.0 | 3.0 | 4.0 | 2.0 | - | | 4.0 | 3.0 | 3.0 | 3.0 |
| 240 h | WRi SRi | 5.0 | 3.0 | 4.0 | 3.0 | 4.0 | 3.0 | - | | 4.0 | 3.0 | 4.0 | 3.0 |
| 264 h | WRi SRi | - | | 5.0 | 3.0 | 4.0 | 3.0 | - | | 5.0 | 3.0 | 5.0 | 3.0 |
| 288 h | WRi SRi | - | | - | | 5.0 | 3.0 | - | | - | | - | |
| 312 h | WRi SRi | - | | - | | - | | - | | - | | - | |
| 336 h | WRi SRi' | - | | - | | - | | - | | - | | - | |
| 360 h | WRi SRi | - | | - | | - | | - | | - | | - | |

**Tabelle 3: Weitere Zusammensetzungen und Prüfergebnisse analog Tabelle 1**

| | Bsp. 13 | Bsp. 14 | Bsp. 15 | Bsp. 16 | Bsp. 17 | | | | | | |
|---|---|---|---|---|---|---|---|---|---|---|---|
| Aromatisches Urethanacrylat Oligomer | 25.09 | 24.32 | 24.32 | 24.32 | 24.32 | | | | | | |
| Aliphatisches Urethanacrylat Oligomer | 25.09 | 24.32 | 24.32 | 24.32 | 24.32 | | | | | | |
| Bernsteinsäureanhydrid | 13,64 | 13,22 | 13,22 | 13,64 | 13,22 | | | | | | |
| Hydroxyethylmethacrylat ("HEMA") | 17,72 | 17,18 | 17,18 | 17,72 | 17,18 | | | | | | |
| phosphoryliertes Hdroxyethylmethacrylat | 1,29 | 1,26 | 1,26 | 1,26 | 1,26 | | | | | | |
| Ti tetra-isopropoxylat | 8.82 | 8.55 | 8.55 | 8.55 | 8.55 | | | | | | |
| Ethoxyliertes (15 EO) Trimethylolpropan | 1,22 | 1,18 | 1,18 | 1,18 | 1,18 | | | | | | |
| Acrylsäure | 0,33 | 0,32 | 0,32 | 0,32 | 0,32 | | | | | | |
| Mischung von 2-Hydroxy-2-methyl-1-phenylpropanon und 1-Hydroxycyclohexylphenylketon | 4.51 | 4.37 | 4.37 | 4.37 | 4.37 | | | | | | |
| Bis-(2,4,6-trimethyl-phenyl)-acylphenyl-phosphinoxid | 0.29 | 0.28 | 0.28 | 0.28 | 0.28 | | | | | | |
| Polyethylenglycol-monoacrylat 400 g/mol | 2.00 | 5.00 | - | - | - | | | | | | |
| Polyethylenglycolmethylether-methacrylat 475 g/mol | - | - | 5.00 | - | - | | | | | | |
| Polyethylenglycol-methylether-methacrylat 1100 g/mol | - | - | - | 5.00 | - | | | | | | |
| Palyethylenglycolmethylether-methacrylat 2080 g/mol | | - | - - | - | 5.00 | | | | | | |

| NSS | | Bsp. 13 | | Bsp. 14 | | Bsp. 15 | | Bsp. 16 | | Bsp. 17 | |
|---|---|---|---|---|---|---|---|---|---|---|---|
| 24 h | WRi SRi | 0 | 0 | 0 | 0 | 0 | 0 | 0 | 0 | 0 | 0 |
| 48 h | WRi SRi | 2.0 | 0 | 2.0 | 0 | 2.0 | 0 | 2.0 | 0 | 2.0 | 0 |
| 72 h | WRi SRi | 2.0 | 1.0 | 2.0 | 1.0 | 3.0 | 0 | 2.0 | 0 | 3.0 | 1.0 |
| 96 h | WRi SRi | 2.0 | 2.0 | 2.0 | 2.0 | 3.0 | 0 | 2.0 | 1.0 | 3.0 | 1.0 |
| 120 h | WRi SRi | 3.0 | 2.0 | 3.0 | 2.0 | 3.0 | 1.0 | 3.0 | 1.0 | 3.0 | 1.0 |
| 144 h | WRi SRi | 3.0 | 3.0 | 3.0 | 3.0 | 3.0 | 2.0 | 3.0 | 2.0 | 3.0 | 2.0 |
| 168 h | WRi SRi | 4.0 | 3.0 | 4.0 | 3.0 | 3.0 | 2.0 | 4.0 | 3.0 | 3.0 | 2.0 |
| 192 h | WRi SRi | 4.0 | 3.0 | 5.0 | 3.0 | 4.0 | 2.0 | 5.0 | 3.0 | 4.0 | 2.0 |
| 216 h | WRi SRi | 4.0 | 3.0 | - | | 4.0 | 3.0 | - | | 4.0 | 3.0 |
| 240 h | WRi SRi | 4.0 | 3.0 | - | | 5.0 | 3.0 | - | | 5.0 | 3.0 |
| 264 h | WRi SRi | 5.0 | 3.0 | - | | - | | - | | - | |
| 288 h | WRi SRi | - | | - | | - | | - | | - | |
| 312 h | WRi SRi | - | | - | | - | | - | | - | |
| 336 h | WRi SRi | - | | - | | - | | - | | - | |
| 360 h | WRi SRi | - | | - | | - | | - | | - | |

**Tabelle 4: Weitere Zusammensetzungen und Prüfergebnisse analog Tabelle 1**

| | Bsp. 18 | Bsp. 19 | Bsp. 20 | Bsp. 21 | Bsp. 22 | Bsp. 23 | | | | | | | |
|---|---|---|---|---|---|---|---|---|---|---|---|---|---|
| Aromatisches Urethanacrylat Oligomer | 25.09 | 23.04 | 24.58 | 23.81 | 22.53 | 21.76 | | | | | | | |
| Aliphatisches Urethanacrylat Oligomer | 25.09 | 23.04 | 24.58 | 23.81 | 22.53 | 21.76 | | | | | | | |
| Bernsteinsäureanhydrid | 13,64 | 12,53 | 13,36 | 12,94 | 12,25 | 11,83 | | | | | | | |
| Hydroxyethylmethacrylat ("HEMA") | 17,72 | 16,27 | 17,35 | 16,81 | 15.91 | 15,36 | | | | | | | |
| phosphoryliertes Hdroxyethylmethacrylat | 1,29 | 1,19 | 1,26 | 1,23 | 1,16 | 1,12 | | | | | | | |
| Ti tetra-isopropoxylat | 8.82 | 8.10 | 8.64 | 8.37 | 7.92 | 7.65 | | | | | | | |
| Ethoxyliertes (15 EO) Trimethylolpropan | 1,22 | 1,12 | 1,19 | 1,16 | 1,09 | 1,06 | | | | | | | |
| Acrylsäure | 0,33 | 0,30 | 0,33 | 0,31 | 0,30 | 0,29 | | | | | | | |
| Mischung von 2-Hydroxy-2-methyl-1-phenylpropanon und 1-Hydroxycyclohexylphenylketon | 4.51 | 4.14 | 4.42 | 4.28 | 4.05 | 3.91 | | | | | | | |
| Bis-(2,4,6-trimethyl-phenyl)-acylphenyl-phosphinoxid | 0.29 | 0.27 | 0.29 | 0.28 | 0.26 | 0.26 | | | | | | | |
| Ag-haltiger Zeolith (0,5 Gew.-% Ag) | 2.00 | 10.00 | 2.00 | 2.00 | 10.00 | 10.00 | | | | | | | |
| Polyethylenglycolmonoacrylat 375 g/mol | - | - | 2.00 | 5.00 | 2.00 | 5.00 | | | | | | | |

| SST | | Bsp. 18 | | Bsp. 19 | | Bsp. 20 | | Bsp. 21 | | Bsp. 22 | | Bsp. 23 | |
|---|---|---|---|---|---|---|---|---|---|---|---|---|---|
| 24 h | WRi SRi | 0 | 0 | 1.0 | 0 | 0 | 0 | 0 | 0 | 1.0 | 0 | 0 | 0 |
| 48 h | WRi SRi | 1.0 | 0 | 2.0 | 0 | 0 | 0 | 0 | 0 | 2.0 | 0 | 2.0 | 0 |
| 72 h | WRi SRi | 1.0 | 1.0 | 2.0 | 1.0 | 1.0 | 0 | 1.0 | 0 | 2.0 | 1.0 | 2.0 | 1.0 |
| 96 h | WRi SRi | 2.0 | 1.0 | 3.0 | 1.0 | 2.0 | 0 | 2.0 | 0 | 3.0 | 1.0 | 2.0 | 2.0 |
| 120 h | WRi SRi | 3.0 | 1.0 | 4.0 | 1.0 | 2.0 | 1.0 | 2.0 | 1.0 | 4.0 | 2.0 | 3.0 | 2.0 |
| 144 h | WRi SRi | 3.0 | 2.0 | 4.0 | 2.0 | 3.0 | 1.0 | 3.0 | 2.0 | 5.0 | 3.0 | 4.0 | 3.0 |
| 168 h | WRi SRi | 3.0 | 2.0 | 5.0 | 3.0 | 3.0 | 2.0 | 3.0 | 2.0 | - | | 4.0 | 3.0 |
| 192 h | WRi SRi | 4.0 | 3.0 | - | | 3.0 | 2.0 | 3.0 | 2.0 | - | | 5.0 | 3.0 |
| 216 h | WRi SRi | 4.0 | 3.0 | - | | 3.0 | 3.0 | 3.0 | 3.0 | - | | - | |
| 240 h | WRi SRi | 5.0 | 3.0 | - | | 3.0 | 3.0 | 3.0 | 3.0 | - | | - | |
| 264 h | WRi SRi | - | | - | | 4.0 | 3.0 | 3.0 | 3.0 | - | | - | |
| 288 h | WRi SRi | - | | - | | 5.0 | 3.0 | 4.0 | 3.0 | - | | - | |
| 312 h | WRi SRi | - | | - | | - | | 5.0 | 3.0 | - | | - | |
| 336 h | WRi SRi | - | | - | | - | | - | | - | | - | |
| 360 h | WRi SRi | - | | - | | - | | - | | - | | - | |

**Tabelle 5: Weitere Zusammensetzungen und Prüfergebnisse analog Tabelle 1**

| | Vergl. 2 | Bsp. 24 | Bsp. 25 | Bsp. 26 | Bsp. 27 | | | | | | |
|---|---|---|---|---|---|---|---|---|---|---|---|
| Aromatisches Urethanacrylat Oligomer | 25.09 | 24.58 | 23.81 | 25.09 | 24.32 | | | | | | |
| Aliphatisches Urethanacrylat Oligomer | 25.09 | 24.58 | 23.81 | 25.09 | 24.32 | | | | | | |
| Bernsteinsäureanhydrid | 13,64 | 13,36 | 12,94 | 13,64 | 13,22 | | | | | | |
| Hydroxyethylmethacrylat ("HEMA") | 17,72 | 17,35 | 16,81 | 17,72 | 17,18 | | | | | | |
| phosphoryliertes Hdroxyethylmethacrylat | 1,29 | 1,26 | 1,23 | 1,29 | 1,26 | | | | | | |
| Ti tetra-isopropoxylat | 8.82 | 8.64 | 8.37 | 8.82 | 8.55 | | | | | | |
| Ethoxyliertes (15 EO) Trimethylolpropan | 1,22 | 1,19 | 1,16 | 1,22 | 1,18 | | | | | | |
| Acrylsäure | 0,33 | 0,33 | 0,31 | 0,33 | 0,32 | | | | | | |
| Mischung von 2-Hydroxy-2-methyl-1-phenylpropanon und 1-Hydroxycyclohexylphenylketon | 4.51 | 4.42 | 4.28 | 4.51 | 4.37 | | | | | | |
| Bis-(2,4,6-trimethyl-phenyl)-acylphenyl-phosphinoxid | 0.29 | 0.29 | 0.28 | 0.29 | 0.28 | | | | | | |
| Plyethylenglycol-monoacrylat 375 g/mol | - | 2.00 | 5.00 | 2.00 | 5.00 | | | | | | |
| Vinyltrimethoxysilan | 1.00 | 1.00 | 1.00 | - | - | | | | | | |
| Ehylen-methacrylat-phosphat | 1.00 | 1.00 | 1.00 | - | - | | | | | | |

| SST | | Vergl. 2 | | Bsp. 24 | | Bsp. 25 | | Bsp. 26 | | Bsp. 27 | |
|---|---|---|---|---|---|---|---|---|---|---|---|
| 24 h | WRi SRi | 0 | 0 | 0 | 0 | 0 | 0 | 0 | 0 | 0 | 0 |
| 48 h | WRi SRi | 0 | 0 | 0 | 0 | 0 | 0 | 1.0 | 0 | 1.0 | 0 |
| 72 h | WRi SRi | 1.0 | 0 | 0 | 0 | 0 | 0 | 2.0 | 0 | 1.0 | 0 |
| 96 h | WRiSRi | 1.0 | 1.0 | 0 | 0 | 0 | 0 | 2.0 | 1.0 | 1.0 | 1.0 |
| 120 h | WRi SRi | 2.0 | 1.0 | 1.0 | 0 | 1.0 | 0 | 3.0 | 1.0 | 2.0 | 1.0 |
| 144 h | WRi SRi | 2.0 | 2.0 | 1.0 | 1.0 | 1.0 | 0 | 3.0 | 2.0 | 2.0 | 2.0 |
| 168 h | WRi SRi | 3.0 | 2.0 | 1.0 | 1.0 | 1.0 | 1.0 | 3.0 | 2.0 | 2.0 | 2.0 |
| 192 h | WRi SRi | 3.0 | 2.0 | 1.0 | 1.0 | 1.0 | 1.0 | 3.0 | 3.0 | 3.0 | 2.0 |
| 216 h | WRi SRi | 4.0 | 2.0 | 2.0 | 1.0 | 2.0 | 1.0 | 4.0 | 3.0 | 3.0 | 3.0 |
| 240 h | WRi SRi | 5.0 | 3.0 | 2.0 | 2.0 | 2.0 | 1.0 | 4.0 | 3.0 | 4.0 | 3.0 |
| 264 h | WRi SRi | - | | 3.0 | 2.0 | 3.0 | 1.0 | 5.0 | 3.0 | 4.0 | 3.0 |
| 288 h | WRi SRi | - | | 3.0 | 2.0 | 3.0 | 2.0 | - | | 4.0 | 3.0 |
| 312 h | WRi SRi | - | | 3.0 | 2.0 | 3.0 | 2.0 | - | | 5.0 | 3.0 |
| 336 h | WRi SRi | - | | 3.0 | 2.0 | 3.0 | 2.0 | - | | - | |
| 360 h | WRi SRi | - | | 4.0 | 2.0 | 4.0 | 2.0 | - | | - | |
| 384 h | WRi SRi | - | | 4.0 | 3.0 | 4.0 | 3.0 | - | | - | |
| 408 h | WRi SRi | - | | 5.0 | 3.0 | 5.0 | 3.0 | - | | - | |

**Tabelle 6: Relative Anhaftung von Mikrorganismen (Staphylococcus aureus), vergl. Beschreibung. Standard: Zusammensetzung "Vergl. 1", als 100 % gesetzt.**

| Zusammensetzung | relative Anhaftung |
|---|---|
| Vergl.1 | 100 % |
| Beisp. 2 | 29 % |
| Beisp. 15 | 87 % |
| Beisp. 17 | 88 % |

## Patentansprüche

1. Durch Polymerisation aushärtbare Zusammensetzung zur Beschichtung von metallischen Werkstoffen, enthaltend:
a) mindestens eine Metallverbindung, die vor und/oder bei dem Aushärten der Zusammensetzung durch Polymerisation mit mindestens einer der Komponente b), c) oder, falls vorhanden, d) reagiert, so dass das Metall in die ausgehärtete Zusammensetzung eingebunden wird, wobei das Metall ausgewählt ist aus Silicium, Titan, Zirkon, Mangan, Zink, Vanadium, Molybdän und Wolfram,
b) zusätzlich zur Komponente a) mindestens ein Monomer oder Oligomer, das mindestens eine Carboxyl- oder Estergruppe und mindestens eine olefinische Doppelbindung enthält und das keine Polyether-Kette aus mindestens fünf Ethylenoxid- und/oder Propylenoxid-Einheiten aufweist,
c) mindestens eine Verbindung, die sowohl eine Polyether-Kette aus mindestens fünf Ethylenoxid- und/oder Propylenoxid-Einheiten als auch mindestens eine Carboxyl- oder Estergruppe mit mindestens einer polymerisierbaren Doppelbindung enthält.

2. Zusammensetzung nach Anspruch 1, **dadurch gekennzeichnet, dass** sie zusätzlich als Komponente
d) mindestens einen Initiator zur radikalischen und/oder kationischen Polymerisation enthält.

3. Zusammensetzung nach einem oder beiden der Ansprüche 1 und 2, **dadurch gekennzeichnet, dass** die Metallverbindung a) mindestens eine an das Metall gebundene Acetylacetonat-, Alkoholat-, Thiolat-, Amino- oder Amidogruppe enthält, die durch eine Carboxylgruppe der Komponente b), c) oder d), falls letztere vorhanden ist und eine Carboxylgruppe trägt, ersetzt werden kann.

4. Zusammensetzung nach einem oder mehreren der Ansprüche 1 bis 3, **dadurch gekennzeichnet, dass** die Metallverbindung a) mindestens eine an das Metall gebundene organische Gruppe, vorzugsweise eine organische Säuregruppe enthält, die mindestens eine polymerisierbare C = C - Doppelbindung oder C ≡ C - Dreifachbindung aufweist.

5. Zusammensetzung nach einem oder mehreren der Ansprüche 1 bis 4, **dadurch gekennzeichnet, dass** die Metallverbindung a) ausgewählt ist aus Verbindungen der allgemeinen Formel (II) 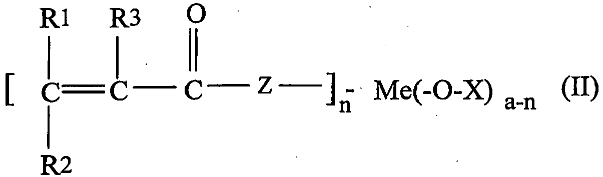
worin R1 und/oder R2 H, C₁- bis C₁₂-Alkyl, Aralkyl oder die Gruppe -CO-O-Y, R3=H oder C₁- bis C₁₂-Alkyl,
Me = ein Metallatom mit einer Oxidationsstufe von a ausgewählt aus Silicium, Titan, Zirkon, Mangan, Zink, Vanadium, Molybdän und Wolfram,
X = H, C₁- bis C₁₂-Alkyl, Aryl, Aralkyl, Alkoxyl, oder Aroxyl, oder 2(-O-X) = Acetyl-acetonat,
Y = H, C₁- bis C₁₂-Alkyl oder ein weiteres Metallion Me sein können,
Z ausgewählt ist aus O, NH₂, einer Gruppe O-Z^{b}-C(=O)-O, einer Gruppe O- Z^{b} -P(=O)-O, einer Gruppe O- Z^{b} -P(=O)₂-O, einer Gruppe O- Z^{b} -O - P(=O)-O, einer Gruppe O- Z^{b} - O -P(=O)₂-O, einer Gruppe O- Z^{b} -S(=O)₂-O, einer Gruppe O- Z^{b} -O - S(=O)₂-O, wobei Z^{b} eine organische Gruppierung darstellt,
und n = 0 bis a, vorzugsweise 1 bis (a-1) ist, wobei a die Oxidationsstufe des Metalls Me bedeutet.

6. Zusammensetzung nach Anspruch 5, **dadurch gekennzeichnet, dass** die Gruppe Z^{b} ausgewählt ist aus:
einer linearen oder verzweigte Alkylengruppe, vorzugsweise einer linearen Alkylengruppe (CH₂)ₓ, wobei x eine Zahl im Bereich von 1 bis 10, insbesondere im Bereich von 2 bis 4 ist,
(CHR⁴ - CHR⁴ - O -)_{y} CHR⁴ - CHR⁴, wobei R⁴ = unabhängig voneinander jeweils H oder CH₃ und y = 0 oder eine Zahl im Bereich von 1 bis 9 ist,
(CH₂)ₓ - O - C(=O) - (CH₂)_{y}, wobei x und y unabhängig voneinander eine Zahl im Bereich von 1 bis 10, insbesondere im Bereich von 2 bis 4 ist.

7. Zusammensetzung nach einem oder beiden der Ansprüche 5 und 6, **dadurch gekennzeichnet, dass** in der allgemeinen Formel (II) mindestens einer, vorzugsweise mindestens zwei und insbesondere alle drei der Reste R1, R2 und R3 unabhängig voneinander ausgewählt sind aus H, CH₃, C₂H₅, C₃H₇ und C₄H₉.

8. Zusammensetzung nach einem oder mehreren der Ansprüche 1 bis 7, **dadurch gekennzeichnet, dass** das Monomer oder Oligomer der Gruppe b) ausgewählt ist aus Acrylsäure, Methacrylsäure, Crotonsäure, Vinylessigsäure, Maleinsäure, Fumarsäure und aus Monomeren oder Oligomeren, die mindestens eine derartige Säuregruppe aufweisen, wobei die Carbonsäuregruppen vollständig oder teilweise verestert sein können.

9. Zusammensetzung nach Anspruch 8, **dadurch gekennzeichnet, dass** das Monomer oder Oligomer der Gruppe b) ausgewählt ist aus aromatischen oder aliphatischen Urethan-Acrylat- oder Urethan-Methacrylat-Oligomeren sowie Addukten oder Copolymeren von Acrylsäure oder Methacrylsäure oder Hydroxyalkyl-Derivaten hiervon mit ungesättigten Dicarbonsäuren oder mit Anhydriden mehrbasischer Carbonsäuren oder Derivaten hiervon.

10. Zusammensetzung nach einem oder mehreren der Ansprüche 1 bis 9, **dadurch gekennzeichnet, dass** die Verbindung der Gruppe c) eine Molmasse im Bereich von 250 bis 2500, vorzugsweise im Bereich von 300 bis 650 aufweist.

11. Zusammensetzung nach einem oder mehreren der Ansprüche 1 bis 10, **dadurch gekennzeichnet, dass** sie zusätzlich als Komponente
e) einen bioziden Wirkstoff enthält.

12. Zusammensetzung nach Anspruch 11, dadurch gekennzeichet, dass der biozide Wirkstoff eine partikelförmige anorganische Verbindung oder ein partikelförmiges Metall darstellt.

13. Zusammensetzung nach Anspruch 11 oder Anspruch 12, **dadurch gekennzeichnet, dass** der biozide Wirkstoff biozide Metallionen enthält, die an ein zum Kationenaustausch befähigtes organisches oder anorganisches Gerüst gebunden und durch Alkalimetallionen austauschbar sind.

14. Zusammensetzung nach Anspruch 11 oder 13, **dadurch gekennzeichnet, dass** der biozide Wirkstoff Metallkationen enthält, die ausgewählt sind aus Zinn-, Zink-, Kupfer- und Silberionen.

15. Zusammensetzung nach einem oder mehreren der Ansprüche 1 bis 14, **dadurch gekennzeichnet, dass** sie die Komponenten in folgenden Anteilen in Gewichtsprozent bezogen auf die gesamte Zusammensetzung enthält:
Komponente a): 2 bis 49,99, vorzugsweise 7 bis 35 Gew.-%,
Komponente b): 50 bis 90 Gew.-%,
Komponente c): 0,01 bis 20, vorzugsweise 0,1 bis 10,
insbesondere 0,5 bis 6 Gew.-%,
Komponente d): 0 bis 10, vorzugsweise 1 bis 8,
insbesondere 2 bis 6 Gew.-%,
Komponente e): 0 bis 15, vorzugsweise 0,5 bis 12 Gew.-%.

16. Zusammensetzung nach Anspruch 15, **dadurch gekennzeichnet, dass** sich die Anteile der Komponenten a) bis e) zu mindestens 80 Gew.-%, vorzugsweise zu mindestens 90 Gew.-% der gesamten Zusammensetzung addieren und die Zusammensetzung nicht mehr als 20 Gew.-%, vorzugsweise nicht mehr als 10 Gew.-% weitere Komponenten enthält.

17. Zusammensetzung nach einem oder mehreren der Ansprüche 1 bis 16, **dadurch gekennzeichnet, dass** die Zusammensetzung maximal 10 Gew.-%, vorzugsweise maximal 5 Gew.-% weitere Komponenten enthält, vorzugsweise ausgewählt aus Haftvermittlern, insbesondere Silanen, und Korrosionsschutzmitteln, vorzugsweise ausgewählt aus der Gruppe umfassend: organische Phosphate und Phosphonate, Silicate, insbesondere Schichtsilicate, Alkoxysilane und deren Hydrolyse- und Kondensationsprodukte.

18. Zusammensetzung nach einem oder mehreren der Ansprüche 1 bis 17, **dadurch gekennzeichnet, dass** sie nicht mehr als 10 Gew.-%, vorzugsweise nicht mehr als 5 Gew.-% an Komponenten enthält, die beim Aushärten durch Polymerisation nicht in die entstehende Schicht eingebaut werden.

19. Verfahren zur Beschichtung von Metallband, **dadurch gekennzeichnet, dass** man ein Beschichtungsmittel nach einem oder mehreren der Ansprüche 1 bis 18 in einer solchen Schichtdicke auf das laufende Metallband aufbringt und durch Bestrahlung mit energiereicher Strahlung, vorzugsweise mit Elektronenstrahlung oder mit UV-Strahlung, aushärtet, dass man nach dem Aushärten eine Schicht mit einer Dicke im Bereich von 1 bis 10 µm, vorzugsweise 2 bis 6 µm enthält.

20. Verfahren nach Anspruch 19, **dadurch gekennzeichnet, dass** die Metallband-Oberfläche vor dem Aufbringen des Beschichtungsmittels nach einem oder mehreren der Ansprüche 1 bis 18 keiner anderen Korrosionsschutzbehandlung unterzogen und dass nach dem Aufbringen und Aushärten des Beschichtungsmittels nach einem oder mehreren der Ansprüche 1 bis 19 das Metallband nicht mit einer weiteren Beschichtung überbeschichtet wird.

21. Verfahren nach einem oder beiden der Ansprüche 19 und 20, **dadurch gekennzeichnet, dass** das Metallband ausgewählt ist aus Bänder von Zink, Stahl, verzinktem oder legierungsverzinktem Stahl, Edelstahl oder aus Aluminium und seinen Legierungen.

22. Beschichtetes Metallband oder hieraus abgeteiltes Metallblech, das gegebenenfalls umgeformt sein kann, **dadurch gekennzeichnet, dass** es eine Beschichtung aufweist, die nach einem oder mehreren der Ansprüche 20 bis 21 erhältlich ist.

## Claims

1. A composition, curable by polymerization, for coating metal materials, said composition containing:
a) at least one metal compound which reacts before and/or during curing of the composition by polymerization with at least one of components b), c) and, if present, d), so that the metal is bound in the cured layer, said metal being selected from silicon, titanium, zirconium, manganese, zinc, vanadium, molybdenum and tungsten;
b) in addition to component a), at least one monomer or oligomer that contains at least one carboxyl or ester group and at least one olefinic double bond and has no polyether chain of at least five ethylene oxide and/or propylene oxide units;
c) at least one compound containing both a polyether chain of at least five ethylene oxide and/or propylene oxide units and at least one carboxyl or ester group having at least one polymerizable double bond.

2. The composition according to claim 1, **characterized in that** it contains in addition as a component
d) at least one initiator for free radical and/or cationic polymerization.

3. The composition according to one or both of claims 1 and 2, **characterized in that** the metal compound a) contains at least one acetylacetonate, alcoholate, thiolate, amino, or amido group which is bonded to the metal and can be replaced by a carboxyl group of component b), c), or d), if the latter is present and carries a carboxyl group.

4. The composition according to one or more of claims 1 to 3, **characterized in that** the metal compound a) contains at least one organic acid group, preferably an organic acid group, bonded to the metal and having at least one polymerizable C=C double bond or C≡C triple bond.

5. The composition according to one or more of claims 1 to 4, **characterized in that** the metal compound a) is selected from compounds of the general formula (II) 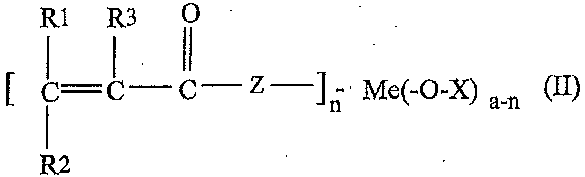
where R1 and/or R2 may be H, C₁ to C₁₂ alkyl, aralkyl, or the group -CO-O-Y, R3 = H or C₁ to C₁₂ alkyl,
Me = a metal atom having an oxidation state of a and selected from silicon, titanium, zirconium, manganese, zinc, vanadium, molybdenum, and tungsten,
X = H, C₁ to C₁₂ alkyl, aryl, aralkyl, alkoxyl, or aroxyl, or 2(-O-X) = acetylacetonate,
Y = H, C₁ to C₁₂ alkyl, or a further metal ion Me,
Z is selected from O, NH₂, a group O-Z^{b}-C(=O)-O, a group O-Z^{b}-P(=O)-O, a group O-Z^{b} -P(=O)₂-O, a group O-Z^{b}-O-P(=O)-O, a group O-Z^{b}-O-P(=O)₂-O, a group O-Z^{b}-S(=O)₂-O, a group O-Z^{b}-O-S(=O)₂-O, where Z^{b} is an organic group,
and n is 0 to a, preferably 1 to (a-1), where a is the oxidation state of the metal Me.

6. The composition according to claim 5, **characterized in that** the group Z^{b} is selected from:
a linear or branched alkylene group, preferably a linear alkylene group, (CH₂)ₓ, where x is a number in the range of 1 to 10, particularly in the range of 2 to 4,
(CHR⁴-CHR⁴-O-)_{y}CHR⁴-CHR⁴, where each R⁴, independently of one another, is in each case H or CH₃, and y = 0 or a number in the range of 0 to 9,
(CH₂)ₓ-O-C(=O)-(CH₂)_{y}, where x and y, independently of one another, are a number in the range of 1 to 10, particularly in the range of 2 to 4.

7. The composition according to one of both of claims 5 and 6, **characterized in that** in the general formula (II) at least one, preferably at least two, and particularly all three of the groups R1, R2, and R3 independently of one another are selected from H, CH₃, C₂H₅, C₃H₇, and C₄H₉.

8. The composition according to one or more of claims 1 to 7, **characterized in that** the monomer or oligomer of group b) is selected from acrylic acid, methacrylic acid, crotonic acid, vinylacetic acid, maleic acid, fumaric acid, and from monomers or oligomers that have at least one such acid group, whereby the carboxylic acid groups can be completely or partially esterified.

9. The composition according to claim 8, **characterized in that** the monomer or oligomer of group b) is selected from aromatic or aliphatic urethane-acrylate or urethane-methacrylate oligomers and adducts or copolymers of acrylic acid or methacrylic acid or hydroxyalkyl derivatives thereof with unsaturated dicarboxylic acids or with anhydrides of polybasic carboxylic acids or derivatives thereof.

10. The composition according to one or more of claims 1 to 9, **characterized in that** the compound of group c) has a molar mass in the range of 250 to 2500, preferably in the range of 300 to 650.

11. The composition according to one or more of claims 1 to 10, **characterized in that** it contains in addition as a component
e) a biocidal active substance.

12. The composition according to claim 11, **characterized in that** the biocidal active substance is a particulate inorganic compound or a particulate metal.

13. The composition according to claim 11 or claim 12, **characterized in that** the biocidal active substance contains biocidal metal ions which are bound to an organic or inorganic skeleton capable of cation exchange and are exchangeable for alkali metal ions.

14. The composition according to claim 11 or 13, **characterized in that** the biocidal active substance contains metal cations which are selected from tin, zinc, copper and silver ions.

15. The composition according to one or more of claims 1 to 14, **characterized in that** it contains the components in the following amounts in percentage by weight, based on the total composition:
component a): from 2 to 49.99, 7 to 35% by weight,
component b): from 50 to 90% by weight,
component c): from 0.01 to 20, preferably 0.1 to 10,
particularly 0.6 to 6% by weight,
component d): from 0 to 10, preferably 1 to 8,
particularly 2 to 6% by weight,
component e): from 0 to 15, preferably 0.5 to 12% by weight.

16. The composition according to claim 15, **characterized in that** the amounts of components a) to e) sum to at least 80% by weight, preferably to at least 90% by weight of the total composition, and the composition contains no more than 20% by weight, preferably no more than 10% by weight of further components.

17. The composition according to one or more of claims 1 to 16, **characterized in that** the composition contains a maximum of 10% by weight, preferably a maximum of 5% by weight, of further components, preferably selected from adhesion promoters, particularly silanes, and corrosion inhibitors, preferably selected from the group comprising: organic phosphates and phosphonates, silicates, particularly phyllosilicates, alkoxysilanes, and the hydrolysis and condensation products thereof.

18. The composition according to one or more of claims 1 to 17, **characterized in that** they contain no more than 10% by weight, preferably no more than 5% by weight, of components that are not incorporated into the resulting layer during curing by polymerization.

19. A method for coating a metal strip, **characterized in that** a coating material according to one or more of claims 1 to 18 is applied in such a layer thickness to the moving metal strip and cured by irradiation with high-energy radiation, preferably with electron beams or with UV radiation, that, after curing, a layer having a thickness in the range of 1 to 10 µm, preferably 2 to 6 µm, is obtained.

20. The method according to claim 19, **characterized in that** the metal strip surface before the application of the coating material according to one or more of claims 1 to 18 is not subjected to another corrosion inhibition treatment and that the metal strip is not overcoated with a further coating after the application and curing of the coating material according to one or more of claims 1 to 19.

21. A method according to one or both of claims 19 and 20, **characterized in that** the metal strip is selected from strips of zinc, steel, galvanized or alloy-galvanized steel, stainless steel, or of aluminum and alloys thereof.

22. A coated metal strip or metal sheet cut therefrom, which can optionally be shaped, **characterized in that** it has a coating which is obtainable according to one or more of claims 20 to 21.

## Revendications

1. Composition durcissable par polymérisation destinée au revêtement de matières métalliques, comprenant :
a) au moins un composé métallique qui réagit avec au moins un des composants b),
c) ou, le cas échéant, d) avant et/ou pendant le durcissement de la composition par polymérisation de sorte que le métal est incorporé dans la composition durcie, le métal étant choisi parmi le silicium, le titane, le zirconium, le manganèse, le zinc, le vanadium, le molybdène et le tungstène,
b) en plus du composant a) au moins un monomère ou oligomère qui contient au moins un groupe carboxyle ou ester et au moins une double liaison oléfinique et qui ne comporte pas de chaîne polyéther d'au moins cinq unités oxyde d'éthylène et/ou oxyde de propylène,
c) au moins un composé qui contient à la fois une chaîne polyéther d'au moins cinq unités oxyde d'éthylène et/ou oxyde de propylène et au moins un groupe carboxyle ou ester comportant au moins une double liaison polymérisable.

2. Composition selon la revendication 1, **caractérisée en ce qu'**elle contient en plus comme composant
d) au moins un initiateur de polymérisation radicalaire et/ou cationique.

3. Composition selon l'une des revendications 1 et 2 ou les deux, **caractérisée en ce que** le composé métallique a) contient au moins un groupe acétylacétonate, alcoxyde, thiolate, amino ou amido qui est lié au métal et qui peut être remplacé par un groupe carboxyle par le composant b), c) ou d), si ce dernier est présent et porte un groupe carboxyle.

4. Composition selon l'une ou plusieurs des revendications 1 à 3, **caractérisée en ce que** le composé métallique a) contient au moins un groupe organométallique, de préférence un groupe acide organique, qui est lié au métal et qui contient au moins un double liaison C=C- ou triple liaison C=C polymérisable.

5. Composition selon l'une ou plusieurs des revendications 1 à 4, **caractérisée en ce que** le composé métallique a) est choisi parmi les composés de la formule générale (II) 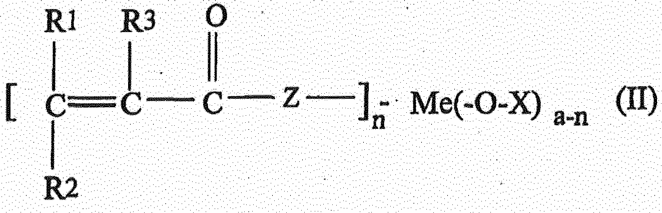
dans laquelle R1 et/ou R2 est H, alkyle en C₁ à C₁₂, aralkyle ou le groupe -CO-O-Y, R₃ est H ou alkyle en C₁ à C₁₂,
Me est un atome métallique d'état d'oxydation a choisi parmi le silicium, le titane, le zirconium, le manganèse, le zinc, le vanadium, le molybdène et le tungstène,
X est H, alkyle en C₁ à C₁₂, aryle, aralkyle, alcoxy, ou aroxyl, ou 2(-O-X)=acétonate d'acétyle,
Y est H, alkyle en Ci à C₁₂ ou un autre métal ions métallique Me,
Z est choisi parmi O, NH₂, un groupe O-Z^{b}-C(=O)-O, un groupe O-Z^{b}-P(=O)-O, un groupe O-Z^{b}-P(=O)₂-O, un groupe O-Z^{b}-O-P(=O)-0, un groupe O-Z^{b}-O-P(=O)₂-O, un groupe O-Z^{b} -S(=O)₂-O, un groupe O-Z^{b}-O-S(=O)₂-O, Z^{b} représentant un groupement organique,
et n étant compris entre 0 et a, de préférence 1 et (a-1), a étant l'état d'oxydation du métal Me.

6. Composition selon la revendication 5, **caractérisée en ce que** le groupe Z^{b} est choisi parmi :
un groupe alkylène linéaire ou ramifié, de préférence un groupe alkylène (CH₂)ₓ, x étant un nombre dans la gamme de 1 à 10, notamment dans la gamme de 2 à 4,
(CHR⁴-CHR⁴-O-)_{y}CHR⁴-CHR⁴, R⁴ étant indépendamment H ou CH₃ et y étant 0 ou un nombre dans I gamme de 1 à 9,
(CH₂)_{X}-O-C(=O)-(CH₂)_{y}, x et y étant indépendamment un nombre dans la gamme de 1 à 10, notamment dans la gamme de 2 à 4.

7. Composition selon l'une des revendications 5 et 6 ou les deux, **caractérisée en ce que** dans la formule générale (II) au moins un des radicaux R1, R2 et R3, de préférence au moins deux et notamment tous les trois, sont choisis indépendamment parmi H, CH₃, C₂H₅, C₃H₇ et C₄H₉.

8. Composition selon l'une ou plusieurs des revendications 1 à 7, **caractérisée en ce que** le monomère ou l'oligomère du groupe b) est choisi parmi l'acide acrylique, l'acide méthacrylique, l'acide crotonique, l'acide vinylacétique, l'acide maléique, l'acide fumarique et es monomères ou oligomères qui contiennent au moins un tel groupe acide, les groupes acide carboxylique pouvant être estérifiés totalement ou partiellement.

9. Composition selon la revendication 8, **caractérisée en ce que** le monomère ou l'oligomère du groupe b) est choisi parmi les oligomères acrylate d'uréthane ou méthacrylate d'uréthane aromatiques ou aliphatiques ainsi que des produits d'addition ou des copolymères d'acide acrylique ou d'acide méthacryliques ou leurs dérivés hydroxyalkyle comprenant des acides dicarboxyliques insaturé ou des anhydrides d'acides carboxyliques polybasiques ou leurs dérivés.

10. Composition selon l'une ou plusieurs des revendications 1 à 9, **caractérisée en ce que** le composé du groupe c) a un poids moléculaire dans la gamme de 250 à 2500, de préférence dans la gamme de 300 à 650.

11. Composition selon l'une ou plusieurs des revendications 1 à 10, **caractérisée en ce qu'**elle contient en outre comme composant
e) un agent biocide.

12. Composition selon la revendication 11, **caractérisée en ce que** l'agent biocide est un composé minéral particulaire ou un métal particulaire.

13. Composition selon la revendication 11 ou la revendication 12, **caractérisée en ce que** l'agent biocide contient des ions métalliques biocides qui sont liés à un cadre organique ou minéral échangeur de cations et qui peuvent être remplacés par des ions métalliques alcalins.

14. Composition selon la revendication 11 ou 13, **caractérisée en ce que** l'agent biocide contient des cations métalliques choisis parmi les ions étain, zinc, cuivre et argent.

15. Composition selon l'une ou plusieurs des revendications 1 à 14, **caractérisée en ce qu'**elle comprend les composants dans les proportions suivantes en pourcentage en poids, sur la base de la composition totale :
composant a) : de 2 à 49,99, de préférence de 7 à 35% en poids,
composant b) : de 50 à 90% en poids,
composant c) : de 0,01 à 20, de préférence de 0,1 à 10, en particulier de 0,5 à 6% en poids,
composant d) : de 0 à 10, de préférence 1 à 8, en particulier de 2 à 6% en poids,
composant e) : de 0 à 15, de préférence de 0,5 à 12% en poids.

16. Composition selon la revendication 15, **caractérisée en ce que** les proportions des composants a) à e) totalisent au moins 80% en poids, de préférence au moins 90% en poids de la composition totale et la composition ne contient pas plus de 20% en poids, de préférence 10% en poids, d'autres composants.

17. Composition selon l'une ou plusieurs des revendications 1 à 16, **caractérisée en ce que** la composition contient au maximum 10% en poids, de préférence au maximum 5% en poids, d'autres composants, de préférence choisi parmi les agents adhésifs, notamment les silanes, et les agents anticorrosion de préférence choisis dans le groupe comportant: les phosphates et phosphonates organiques, les silicates, notamment les phyllosilicates, les alcoxysilanes et leurs produits de condensation et d'hydrolyse.

18. Composition selon l'une ou plusieurs des revendications 1 à 17, **caractérisée en ce qu'**elle ne contient pas plus de 10% en poids, de préférence pas plus de 5% en poids, de composants qui ne sont pas incorporés dans la couche générée pendant le durcissement par polymérisation.

19. Procédé de revêtement d'une bande métallique, **caractérisé en ce qu'**on applique une composition de revêtement selon l'une ou plusieurs des revendications 1 à 18 sur la bande métallique en mouvement, et on la durcit par irradiation avec un rayonnement à haute énergie, de préférence un rayonnement d'électrons ou un rayonnement d'UV, sur une épaisseur telle que l'on obtient une couche d'une épaisseur dans la gamme de 1 à 10 µm, de préférence 2 à 6 µm après durcissement.

20. Procédé selon la revendication 19, **caractérisé en ce que**, avant l'application de la composition de revêtement selon l'une ou plusieurs des revendications 1 à 18, la surface de la bande métallique n'est soumise à aucun autre traitement anticorrosion et **en ce que**, après l'application et le durcissement de la composition de revêtement selon l'une ou plusieurs des revendications 1 à 19, la bande métallique n'est recouverte d'aucun autre revêtement.

21. Procédé selon l'une des revendications 19 et 20 ou les deux, **caractérisé en ce que** la bande métallique est choisie parmi les bandes de zinc, d'acier, d'acier recouvert de zinc ou d'un alliage de zinc, d'acier spécial ou d'aluminium et de ses alliages.

22. Bande métallique revêtue ou tôle métallique détachée de celle-ci, qui peut être éventuellement mise en forme, **caractérisée en ce qu'**elle comporte un revêtement qui peut être obtenu selon l'une ou plusieurs des revendications 20 à 21.
